# EUROPÄISCHE PATENTSCHRIFT

(11) **EP 2 315 429 B1**
(45) Veröffentlichungstag und Bekanntmachung des Hinweises auf die Patenterteilung: **30.03.2016**
(21) Anmeldenummer: 09172353.6
(22) Anmeldetag: 06.10.2009
(51) Int. Cl.: H04N 21/41, H04N 21/434, H04N 21/4402, H04N 21/442, H04N 21/4722, H04N 21/488

(54) **Verfahren, Vorrichtung und System zur selektiven Ausgabe von Multimediainhalten**
Method, device and system for selective release of multimedia contents
Procédé, dispositif et système d'émission sélective de contenus multimédias

(43) Veröffentlichungstag der Anmeldung: 27.04.2011
(73) Patentinhaber: Nokia Solutions and Networks Oy, 02610 Espoo (FI)
(72) Erfinder: Lueken, Joachim, 80686 München (DE); Heiles, Juergen, 81476 München (DE)
(74) Vertreter: Borgström, Markus

(56) Entgegenhaltungen:
- WO-A1-03/088671
- US-A1- 2006 026 302
- US-A1- 2008 077 965
- US-A1- 2009 064 221
- US-A1- 2009 216 745
- ANONYMOUS: 'RECEIVED SIGNAL STRENGTH INDICATION' WIKIPEDIA, THE FREE ENCYCLOPEDIA, [Online] 09 Dezember 2008, Seiten 1 - 2, XP055221411 Gefunden im Internet: <URL:https://en.wikipedia.org/w/index.php?t itle=Received_signal_strength_indication&ol did=256919519> [gefunden am 2015-10-15]

## Beschreibung

Die Erfindung betrifft ein Verfahren, eine Vorrichtung und ein System zur selektiven Ausgabe von Multimediainhalten.

Aus der Veröffentlichung US 2008/077965 A1 (KAMIKAKI HIDEKI [JP] ET AL), 27. März 2008, ist ein Inhalte empfangendes System bekannt, das eine digitale Rundfunkausstrahlung oder ein Rundfunknetz nutzt, um einen Nutzer zu befähigen, einen Hauptinhalt passend zu nutzen und einen Nutzer mit Nebeninhaltsinformation zu versorgen, die von dem Nutzer gewünscht wird.

Gemäß der Veröffentlichung US 2009/216745 A1 (ALLARD JAMES F [US]), 27. August 2009, werden Inhalt und assoziierte Metadaten mit dem Inhalt einer Anzahl von Nutzern bereitgestellt. Der Inhalt kann auf einem Ausgabegerät ausgegeben werden, während die Metadaten an ein entferntes Gerät übertragen werden können, welches mit einem empfangenden Nutzer korrespondiert.

Aus der Veröffentlichung WO 03/088671 A1 (MATSUSHITA ELECTRIC IND CO LTD [JP]), 23 Oktober 2003, ist ein System bekannt für nahtlose Synchronisation durch asynchrone Integration von Internetinhalt mit Rundfunkinhalt innerhalb eines portablen Handgeräts, wie einer entfernten Steuerung oder eines persönlichen digitalen Assistenten (PDA). Das Handgerät empfängt programmbezogene Daten von dem Fernsehgerät, während der Nutzer ein Programm anschaut. Die programmbezogenen Daten versetzen das Handgerät in Synchronisation mit dem Programm, welches der Nutzer anschaut, und erhöhen das Vergnügen des Nutzers an dem Programm durch Bereitstellung ergänzender Rundfunkinformation oder zusätzlicher interaktiver Leistungsmerkmale.

Aus der Veröffentlichung US 2006/026302 A1 (BENNETT JAMES D [US] ET AL), 2. Februar 2006, ist eine Mediaserverkomponente bekannt, welche Medienprogramme an eine Mehrzahl von Klientenmediaspielern über ein Verteilnetz bereitstellt unter Beachtung von verfügbarer Datenübertragungsrate und Mediaspielercharakteristiken. Die Medienprogramme werden adaptiv bereitgestellt an dem empfangenden Mediaspieler unter Beachtung von Bildschirmgröße, notwendiger Auffrischungsgeschwindigkeit, Rahmenrate, Audioformat, Nutzerpräferenzen (wie zum Beispiel Anpassung an den Bereichs des Interesses, Größenanpassung von Fenstern, oder gewünschte Qualität der Ausgabe) und geschätzter verfügbarer Datenübertragungsrate.

Aus der Veröffentlichung US 2009/064221 A1 (STEVENS CLARKE [US]), 5. März 2009, ist ein Verfahren bekannt für automatisches Schalten von Fernsehkanälen oder anderen Inhaltsquellen. Das Verfahren kann genutzt werden mit jedem elektronischen Medium, um das Schalten zwischen Kanälen oder anderen Inhaltsquellen zu erleichtern basierend auf Ereignissen oder anderen Begebenheiten in nicht angeschauten Kanälen.

Fernseh- und Rundfunkprogramme werden über eine Vielzahl von Verteilwegen angeboten. Verbreitete Rundfunkversorgungstechniken nutzen beispielsweise terrestrisches Antennensignal, Kabelnetze, Satellitensysteme sowie Internet Protokoll basierte Netze oder Kommunikationsnetze, wie insbesondere Mobilfunknetze. Aufgrund von Digitalisierung werden hohe Qualität, große Programmvielfalt, Interaktivität und Individualisierung ermöglicht.

Über die genannten Verteilwege werden neben Fernseh- und Audioprogrammen allgemeiner Multimediadienste unterstützt, die beispielsweise auch Video auf Anforderung, Audio auf Anforderung, Spiele, Texte, Bilder, Daten und Internetzugriff umfassen können. Neben derartigen Multimediainhalten wird über die genannten Verteilwege eine Vielzahl zusätzlicher Informationen, insbesondere Multimediainhalten zugehörige Beschreibungen, Metadaten und andere Informationen zur Verfügung gestellt, die beispielsweise eine maschinengestützte Programmauswahl (EPG, ESG) ermöglichen oder weiteres Informationsbedürfnis von Nutzern befriedigen. Zusätzliche Informationen sind beispielsweise auch Videotext-Information, Untertitelinformation oder zu einem Multimediainhalt verfügbare Audioinformation in einer weiteren zusätzlichen wählbaren Sprache. Die zusätzlichen Informationen sind unabhängig davon, ob sie einem Multimediainhalt zugeordnet sind oder Teil eines Multimediainhalts sind, selbst wiederum Multimediainhalte, welche mit anderen Multimediainhalten zu weiteren Multimediainhalten zusammengefasst oder kombiniert werden können, die einem Nutzer bereitgestellt werden können.

Bei IPTV (Internet Protokoll Fernsehen) erfolgt die digitale Übertragung von breitbandigen Anwendungen, wie Fernsehprogrammen und Filmen, über ein digitales Datennetz. Hierzu wird das auch dem Internet zugrunde liegende Internet Protocol (IP) verwendet. Typischerweise wird beim IPTV von einem Telekommunikations-Anbieter einem bestimmten Nutzerkreis, den Abonnenten oder Teilnehmern, ein Programmangebot mit definierter Qualität über ein Breitbandnetz zur Verfügung gestellt. IPTV benötigt i. a. aus technischen Gründen ein geeignetes und vom IPTV Anbieter zugelassenes Endgerät beim Teilnehmer. Das Endgerät empfängt Datenströme über eine Internetanbindung, z.B. eine DSL basierte Anbindung, es teilt diese Datenströme in Teilströme auf (Audio, Video, Daten etc.), dekodiert und liefert i. a. ein Bild- und Audiosignal an eine integrierte oder externe Video-Audio-Ausgabeeinheit. Als Endgeräte stehen insbesondere beispielsweise Set Top Boxen (STB), Fernsehgeräte (TV), Personal Computer (PC), Laptops, Mobilfunkgeräte und mobile Telefone zur Verfügung. Zur Bereitstellung der ein jeweiliges IPTV Angebot betreffenden Multimediadienste sind seitens des Anbieters u. a. Komponenten zur Steuerung, Lastverteilung und Zugangskontrolle, zur Einspeisung von Fernsehprogrammen (TV headend) in das Breitbandnetz, zur Bereitstellung von Video/Audio Inhalten auf Abruf (VoD Server), zur Aufzeichnung von Inhalten (PVRs), zur Übertragung per Streaming und/oder Download, sowie zur Verschlüsselung der zu übertragenden Inhalte vorhanden.

Neben auf einem Festnetz basierten IPTV Netzlösungen gibt es insbesondere für Mobilfunknetze geeignete Netzlösungen für Mobilfernsehen, die typischerweise zum Beispiel von Mobilfunknetzbetreibern angeboten werden. Derartige Netzlösungen benötigen anbieterseitig ähnliche Komponenten, wie bereits vorstehend erwähnt, verwenden jedoch bedingt durch andere Technologie abweichende Konzepte und Standards. Insbesondere sind beispielsweise die Kodierung der Nutzsignale und die Funktionalität der Endgeräte (z.B. Displaygröße, lokale Verarbeitungsleistung, lokaler Speicher, Übertragungsbandbreite) verschieden von den für ein Festnetz eingesetzten IPTV Lösungen.

Zur Ausgabe eines Multimediainhalts kann einem Nutzer insbesondere mehr als ein Endgerät mit jeweils eigener Ausgabeeinheit verfügbar sein. So kann einem Nutzer oder einer Nutzgruppe eines IPTV Dienstes, z. B. einer Familie, eine Set Top Box zur Verfügung stehen und beispielsweise zusätzlich ein weiteres Endgerät, wie ein mobiles Telefon oder ein an ein Kommunikationsnetz angeschlossener Organizer (Handheld).

Neben den Multimediainhalten bereitgestellte zusätzliche Informationen werden als Zusatzinhalte auf Basis insbesondere der voran stehend genannten Rundfunkversorgungstechniken bereitgestellt. Zusatzinhalte sind selbst Multimediainhalte und können mit einem oder mehreren Multimediainhalten verknüpft sein. Zusatzinhalte können beispielsweise mit einem Programmangebot, mit einem Multimediainhalt, mit einem Programmkanal, mit einer Video/Audio-Bibliothek oder mit einem Dienst einer Rundfunk/Fernsehlösung bereitgestellt werden. Zusatzinhalte können Relevanz besitzen für einen gesamten Multimediainhalt oder für Teile des Multimediainhalts, wie beispielsweise eine Szene oder eine Mehrzahl von Szenen. Der Relevanz entsprechend können Zusatzinhalte statisch dauerhaft mit einem Multimediainhalt verfügbar und für eine Ausgabe auf einem Endgerät eines Nutzers abrufbar sein. Zusatzinhalte können ebenfalls mit dem Ausspielfortschritt des Multimediainhalts dynamisch verfügbar und /oder abrufbar sein und auf Anforderung hin am Endgerät des Nutzers ausgegeben werden. Ein Zusatzinhalt kann beispielsweise aufgrund von Navigation in Übersichten verfügbarer Zusatzinhalte oder aufgrund von Kennzeichnungen von Teilen des Multimediainhalts, zum Beispiel einer Kennzeichnung von bewegten Objekten des Multimediainhalts, über eine Eingabe an dem Endgerät des Nutzers oder einer zugehörigen Fernbedienungseinheit abgerufen werden.

Ein Zusatzinhalt zu einem Multimediainhalt ist i. a. verknüpft mit mindestens einem Multimediainhalt und wird beispielsweise zusammen mit dem Multimediainhalt innerhalb eines gemeinsamen oder eines assoziierten Multiplexstromes durch einen Anbieter bereitgestellt. Ebenso kann der Zusatzinhalt aber auch ein nicht mit dem Multimediainhalt verknüpfter weiterer Multimediainhalt sein, für den ein Informationsbedürfnis eines Nutzers vorliegt.

Im Hinblick auf eine gleichzeitige Ausgabe eines Multimediainhalts und eines einen Nutzer interessierenden Zusatzinhalts des Multimediainhalts ist es nachteilig, dass eine gemeinsame Ausgabe über ein einziges Ausgabegerät zu Qualitätseinbußen führen kann und eine Mehrzahl möglicherweise zur Verfügung stehender Endgeräte mit weiteren Ausgabeeinheiten für eine übersichtliche und nutzergerechte Ausgabe unberücksichtigt bleibt. Insbesondere können sich Qualitätseinschränkungen und /oder Informationsverluste durch Einblenden von Informationsfenstern, durch Überblenden von Overlays zur Ausgabe des Zusatzinhalts oder durch sequentielle Ausgabe alternativen Zusatzinhalts ergeben. Ebenfalls ist es von Nachteil, dass individuelle Interessen eines Nutzers einer Nutzergruppe bei gleichzeitiger Nutzung eines Endgeräts durch mehrere Nutzer nicht ohne Rückwirkung auf andere Nutzer berücksichtigt werden können. Ferner ist es von Nachteil, dass Ausgabegeräte wegen ihrer besonderen Fähigkeiten oder Umgebungsbedingungen, z. B. großformatiges HD Fernsehen oder Raumklangakustik/Mehrkanaltonwiedergabe, eine besondere Eignung für eine Ausgabe von gewissen Multimediainhalten bzw. Zusatzinhalten besitzen können und diese nicht automatisch und an die jeweilige Nutzungssituation angepasst herangezogen wird. Schließlich ist es nachteilig, dass eine Bedienung von mehreren gleichzeitig genutzten Ausgabegeräten zum jeweils optimalen Zugriff auf einen Multimediainhalt und einen Zusatzinhalt einen dauerhaften hohen Steuerungsaufwand für einen Nutzer darstellt.

Der Erfindung liegt daher die **Aufgabe** zugrunde, die Ausgabe von Multimediainhalten inklusive von Zusatzinhalten im Hinblick auf Nutzung von mehr als einem Ausgabegerät, einfache Bedienbarkeit und mobiler Verfügbarkeit zu verbessern.

Die Aufgabe wird hinsichtlich des Verfahrens durch die Maßnahmen des Patentanspruchs 1, hinsichtlich der Vorrichtung durch die Merkmale des Patentanspruchs 16 und hinsichtlich des Systems durch die Merkmale des Patentanspruchs 17 gelöst.

Weiterbildungen der Erfindung ergeben sich auch aus den abhängigen Ansprüchen.

Zur Lösung der Aufgabe wird ein Verfahren zur selektiven Ausgabe von Multimediainhalten über ein Endgerät angegeben,
- bei dem ein erster Multimediainhalt an eine erste Ausgabeeinheit ausgegeben wird;
- bei dem eine Anforderung für einen zweiten Multimediainhalt erkannt wird;
- bei dem anhand des ersten Multimediainhalts und zumindest der Anforderung für den zweiten Multimediainhalt ein Ausgabekriterium ermittelt wird;
- bei dem anhand des Ausgabekriteriums aus dem ersten Multimediainhalt und aus dem zweiten Multimediainhalt ein dritter Multimediainhalt gebildet wird zur Bereitstellung für das Endgerät.

Hiermit ist der Vorteil verbunden, dass ein während der laufenden Ausgabe des ersten Multimediainhalts angeforderter zweiter Multimediainhalt, der beispielsweise ein Zusatzinhalt zum ersten Multimediainhalt sein kann, zur automatischen Bestimmung des Ausgabekriteriums führt, welches den für das Endgerät bereitzustellenden Inhalt festlegt. Insbesondere ist es vorteilhaft, dass es hierzu keiner Steuerung durch einen Nutzer bedarf, wodurch der Bedienkomfort gesteigert wird. Weiterhin ist es vorteilhaft, dass hierdurch die Steuerung eines Endgeräts mit einer von der ersten Ausgabeeinheit verschiedenen Ausgabeeinheit erfolgen kann, so dass einem Nutzer mehr als eine Ausgabeeinheit verfügbar werden kann, wodurch Qualitätseinschränkungen und/oder Informationsverluste vermieden werden können und die Übersichtlichkeit und Verständlichkeit der ausgegebenen Inhalte gesteigert werden. Auch ist es vorteilhaft, dass die Bestimmung des Ausgabekriteriums anhand des ersten und der Anforderung des zweiten Multimediainhalts erfolgt. So kann beispielsweise vorteilhaft aus dem Typ des ersten und des zweiten Multimediainhalts automatisch ein Ausgabekriterium gefunden werden, welches zur optimalen Bildung des dritten Multimediainhalts dient. Ist der zweite Multimediainhalt beispielsweise eine reine Textinformation zu dem ersten Multimediainhalt, welcher zum Beispiel ein Spielfilm ist, so kann der dritte Multimediainhalt vorteilhaft identisch zu dem zweiten Multimediainhalt sein, wodurch für das Endgerät eine reine Textausgabe bereitgestellt wird. Ist der zweite Multimediainhalt dagegen beispielsweise eine Untertitelinformation zu dem ersten Multimediainhalt, welcher ein Spielfilm ist, so kann der dritte Multimediainhalt vorteilhaft als eine Überlagerung des ersten und des zweiten Multimediainhalts gebildet werden, wodurch für das Endgerät eine um Untertitelinformation ergänzte Fassung des Spielfilms bereitgestellt wird. Damit ist es möglich, dass ein Nutzer aus einer Nutzergruppe, der zur gemeinsamen Verfolgung des Spielfilms als einziger in der Nutzgruppe Untertitelinformation benötigt, nicht die weiteren Nutzer beeinträchtigt, indem er ihnen eine Ausgabe von Untertitelinformation zumutet, die diese eventuell nicht brauchen oder nicht verstehen können. Auch ist es ein Vorteil, dass der dritte Multimediainhalt aus dem ersten und dem zweiten Multimediainhalt ohne Einschränkungen gebildet werden kann, wodurch eine beliebige statische oder zeitlich veränderliche Mischung von Anteilen des ersten Multimediainhalts und des zweiten Multimediainhalts berücksichtigt werden kann.

Ein Multimediainhalt, insbesondere der erste, der zweite oder der dritte Multimediainhalt, kann z.B. ein Fernsehprogramm, ein Video auf Anforderung, eine Hörfunksendung, ein Audio auf Anforderung, ein elektronisches Spiel oder ein elektronisches Buch sein. Ein Multimediainhalt kann ebenso beispielsweise einen auf Anforderung eines Teilnehmers abrufbaren multimedialen Inhalt, einen Spielfilm, einen Video Clip, eine Video-Botschaft, eine Sprachnachricht, eine Aufzeichnung eines Fernseh- oder Hörfunkprogramms, einen vollständigen oder teilweisen Mitschnitt eines Fernseh- oder Hörfunkprogramms, einen Audio-Inhalt, eine Internetseite, eine Walled Garden Seite, Bildmaterial, Tonmaterial, ein festes Bild, ein bewegtes Bild, ein Live Signal eines Fernseh- oder Hörfunkprogramms, eine Verknüpfung zu einem der vorstehenden Inhalte, eine beliebige Kombination der vorstehenden Inhalte oder eine beliebige Kombination der vorstehenden Inhalte mit weiteren Inhalten umfassen. Ein Multimediainhalt kann insbesondere eine email, eine SMS oder jede andere Form einer elektronischen Benachrichtigung sein. Ein Multimediainhalt kann mindestens einen Videoanteil und/oder mindestens einen Audioanteil und/ oder Zusatzdaten, wie Videotext, Untertitelinformation, EPG/ESG Information, Now and Next Information und sowie Zugriffsinformation und Daten für interaktive Dienste umfassen. Insbesondere kann ein Multimediainhalt die Daten eines MPEG kodierten Informationsstroms eines TV-Kanals oder eines auf Anforderung bereitgestellten Videos oder Teile davon umfassen.

Das Endgerät empfängt Datenströme beispielsweise über eine Internetanbindung, z.B. eine DSL basierte Anbindung, eine andere leitungsgebundene Anbindung, wie beispielsweise über Ethernet, PCM, SDH, oder eine drahtlose Anbindung, wie beispielsweise über WLAN, Bluetooth. Das Endgerät teilt diese Datenströme in Teilströme auf (Audio, Video, Daten etc.), dekodiert und liefert i. a. ein Bild- und Audiosignal an eine integrierte oder externe Video-Audio-Ausgabeeinheit. Als Endgeräte stehen insbesondere beispielsweise Set Top Boxen (STB), Fernsehgeräte (TV), Personal Computer (PC), Lap-tops, Mobilfunkgeräte, mobile Telefone, intelligente Telephone (smart phones), andere mobile Geräte, wie PDAs, Organizers, Musikspieler zur Verfügung.

Eine Ausgabeeinheit, insbesondere die erste Ausgabeeinheit, kann eine Ausgabeeinheit für ein Audiosignal sein, eine Ausgabeeinheit für ein Videosignal oder eine Ausgabeeinheit für ein Audio- und ein Videosignal. Eine Ausgabeeinheit kann in einem Endgerät integriert sein oder separat von einem Endgerät zum Anschluss an ein Endgerät ausgebildet sein. Eine Ausgabeeinheit kann beispielsweise ein Fernsehgerät, ein Lautsprecher, ein Monitor, ein Display eines mobilen oder nicht mobilen Endgeräts, ein Kopfhörer sein.

Eine Weiterbildung ist es, dass das Ausgabekriterium anhand des zweiten Multimediainhalts ermittelt wird.

Zusätzlich zu der Anforderung des zweiten Multimediainhalts kann hiermit auch der zweite Multimediainhalt selbst zur Ermittlung des Ausgabekriteriums herangezogen werden. Dies ist vorteilhaft in den Fällen, in denen aufgrund der mit der Anforderung des zweiten Multimediainhalts verfügbaren Information nicht oder nicht ausreichend auf die Art und /oder den Typ des zweiten Multimediainhalts geschlossen werden kann. Ist der zweite Multimediainhalt beispielsweise ein Hörspiel oder ein Hörbuch, für das keine Video-Information verfügbar ist, und ist dieser Umstand zum Zeitpunkt der Anforderung des zweiten Multimediainhalts nicht ersichtlich, z. B. aus der eventuell verfügbaren Programminformation oder aus den Zugriffsdaten, die standardmäßig eine Adresse zum Zugriff auf eine Videoinformation enthalten können, dann kann das Ausgabekriterium auch ermittelt werden mit dem Zugriff oder dem Vorliegen des zweiten Multimediainhalts, bei dem spätestens offenbar wird, dass keine Video-Information vorhanden ist.

Eine andere Weiterbildung ist es, dass anhand des Ausgabekriteriums aus dem ersten Multimediainhalt und aus dem zweiten Multimediainhalt ein vierter Multimediainhalt gebildet wird zur Ausgabe an die erste Ausgabeeinheit.

Hiermit ist der Vorteil verbunden, dass das Ausgabekriterium zugleich den für die erste Ausgabeeinheit bereitzustellenden Inhalt in optimal angepasster Form festlegt. Insbesondere ist es vorteilhaft, dass es hierzu keiner Steuerung durch einen Nutzer bedarf, wodurch der Bedienkomfort gesteigert wird. So kann beispielsweise aus dem Typ des ersten und des zweiten Multimediainhalts automatisch ein Ausgabekriterium gefunden werden, welches zur optimalen Bildung des vierten Multimediainhalts dient. Besteht der erste Multimediainhalt beispielsweise aus Audio-, Video- und Videotextinformation eines Fernsehprogramms und ist der zweite Multimediainhalt durch die Videotextinformation des ersten Multimediainhalts bestimmt, dann kann das Ausgabekriterium bestimmen, dass der vierte Multimediainhalt die Audio- und Videoinformation des ersten Multimediainhalts umfasst, wohingegen der dritte Multimediainhalt allein die Videotextinformation des ersten Multimediainhalts umfasst. Damit wird eine eventuell überflüssige redundante Ausgabe eines Videotexts über die erste Ausgabeeinheit vorteilhaft vermieden. Auch ist es ein Vorteil, dass der vierte Multimediainhalt aus dem ersten und dem zweiten Multimediainhalt ohne Einschränkungen gebildet werden kann, wodurch eine beliebige statische oder zeitlich veränderliche Mischung von Anteilen des ersten Multimediainhalts und des zweiten Multimediainhalts zur Ausgabe über die erste Ausgabeeinheit berücksichtigt werden kann.

Eine Ausführungsform ist es, dass der dritte Multimediainhalt den ersten Multimediainhalt oder den zweiten Multimediainhalt umfasst.

Damit ist der Vorteil verbunden, dass der dem Endgerät bereitgestellte dritte Multimediainhalt einen um Anteile eines Multimediainhalts ergänzten ersten oder zweiten Multimediainhalt darstellen kann.

Eine andere Ausführungsform ist es, dass der dritte Multimediainhalt identisch ist mit dem ersten Multimediainhalt oder dem zweiten Multimediainhalt.

Hiermit kann vorteilhaft eine automatische Bereitstellung des entweder ersten oder des zweiten Multimediainhalts für das Endgerät in Abhängigkeit von einer Ermittlung des Ausgabekriteriums erfolgen.

Eine weitere Ausführungsform ist es, dass der vierte Multimediainhalt den ersten Multimediainhalt oder den zweiten Multimediainhalt umfasst.

Damit ist der Vorteil verbunden, dass der an die erste Ausgabeeinheit ausgegebene vierte Multimediainhalt einen um Anteile eines Multimediainhalts ergänzten ersten oder zweiten Multimediainhalt darstellt.

Eine andere Ausführungsform ist es, dass der vierte Multimediainhalt identisch ist mit dem ersten Multimediainhalt oder dem zweiten Multimediainhalt.

Hiermit kann vorteilhaft eine automatische Ausgabe des entweder ersten oder des zweiten Multimediainhalts an die erste Ausgabeeinheit in Abhängigkeit von einer Ermittlung des Ausgabekriteriums erfolgen.

Mit den voran stehend genannten Ausführungsformen kann eine Vielzahl von einfachen und vorteilhaften Zuordnungen des ersten und des zweiten Multimediainhalts oder von Teilen davon zu der ersten Ausgabeeinheit und dem Endgerät automatisch herbeigeführt werden. Bei den folgenden Beispielen ist das Ausgabekriterium jeweils bereits aus dem Typ des ersten und des zweiten Multimediainhalts ermittelbar. Der dritte bzw. vierte Multimediainhalt ist durch das Ausgabekriterium jeweils festgelegt als der erste Multimediainhalt, als der zweite Multimediainhalt, als eine Zusammenfassung von erstem und zweitem Multimediainhalt oder Overlay-Ausgabe von erstem und zweitem Multimediainhalt oder eine Fenster-Ausgabe des zweiten Multimediainhalts in dem ersten Multimediainhalt oder eine Fenster-Ausgabe des ersten Multimediainhalts in dem zweiten Multimediainhalt. Hierbei bezeichnet eine Overlay-Ausgabe eines Multimediainhalts die transparente Überblendung des Multimediainhalts über einen anderen Multimediainhalt, welcher als Hintergrund wahrnehmbar bleibt. Für die folgenden Beispiele sei jeweils angenommen, dass die erste Ausgabeeinheit einen großen Bildschirm und einen gute akustische Wiedergabe ermöglicht, wohingegen das Endgerät als mobiles Endgerät mit integrierter Ausgabeeinheit oder als Personal Computer mit audio-visueller Ausgabeeinheit angenommen sei.

Umfasst der erste Multimediainhalt beispielsweise nur Audio-Information und der zweite Multimediainhalt nur Text, Daten, oder EPG Information, dann kann das Ausgabekriterium den dritten Multimediainhalt identisch zu dem zweiten Multimediainhalt und den vierten Multimediainhalt als Zusammenfassung des ersten und des zweiten Multimediainhalts festlegen. Damit wird die Audio-Information mit hoher Qualität bereitgestellt und die textuelle Information über das Endgerät und über die erste Ausgabeeinheit ausgegeben.

Umfasst der erste Multimediainhalt beispielsweise keine Audio-Information und der zweite Multimediainhalt nur Audio-Information, dann kann das Ausgabekriterium den dritten Multimediainhalt identisch zu dem ersten Multimediainhalt und den vierten Multimediainhalt als Zusammenfassung des ersten und des zweiten Multimediainhalts festlegen. Damit wird die Audio-Information mit hoher Qualität bereitgestellt und eine visuelle Information über das Endgerät und über die erste Ausgabeeinheit ausgegeben.

Umfasst der erste Multimediainhalt beispielsweise Audio- und Videoinformation und der zweite Multimediainhalt eine zusätzliche Audio-Information, z. B. einen Synchronsprachinformation oder eine weitere Tonspur, dann kann das Ausgabekriterium den dritten Multimediainhalt identisch zu dem zweiten Multimediainhalt und den vierten Multimediainhalt identisch zu dem ersten Multimediainhalt festlegen. Damit wird die Synchronsprachinformation oder die weitere Tonspur nur dem Endgerät bereitgestellt.

Umfasst der erste Multimediainhalt beispielsweise ein Video in SD Qualität und der zweite Multimediainhalt ein Video in HD Qualität, dann kann das Ausgabekriterium den dritten Multimediainhalt aufgrund von Konfigurationsdaten, beispielsweise einer Defaulteinstellung, identisch zu dem ersten Multimediainhalt festlegen und den vierten Multimediainhalt identisch zu dem zweiten Multimediainhalt. Damit wird ein HD Video per Default über die erste Ausgabeeinheit ausgegeben. Dies ist vorteilhaft, wenn die erste Ausgabeeinheit beispielsweise geeignet für die Ausgabe von HD Qualität ist, womit ein möglicher Umkodierungsaufwand vermieden werden kann.

Umfasst der erste Multimediainhalt beispielsweise Audio- und Videoinformation, und der zweite Multimediainhalt nur Untertitelinformation zu dem ersten Multimediainhalt, dann kann das Ausgabekriterium den dritten Multimediainhalt als Zusammenfassung des Video Anteils des ersten Multimediainhalts und des zweiten Multimediainhalts und den vierten Multimediainhalt identisch zu dem ersten Multimediainhalt festlegen. Damit wird dem Endgerät das Video mit Untertitel bereitgestellt, und der erste Multimediainhalt wird unverändert über die erste Ausgabeeinheit ausgegeben.

Umfasst der erste Multimediainhalt beispielsweise Audio- und Videoinformation und der zweite Multimediainhalt nur Videotext- oder EPG -Information, dann kann das Ausgabekriterium den dritten Multimediainhalt identisch zu dem zweiten Multimediainhalt und den vierten Multimediainhalt identisch zu dem ersten Multimediainhalt festlegen. Damit wird die Videotext- oder EPG -Information nur dem Endgerät bereitgestellt, und der erste Multimediainhalt wird unverändert über die erste Ausgabeeinheit ausgegeben.

Umfasst der erste Multimediainhalt beispielsweise Audio- und Videoinformation und der zweite Multimediainhalt nur eine Interaktive Anwendung, dann kann das Ausgabekriterium den dritten Multimediainhalt identisch zu dem zweiten Multimediainhalt und den vierten Multimediainhalt identisch zu dem ersten Multimediainhalt festlegen. Damit wird die Interaktive Anwendung nur dem Endgerät bereitgestellt, und der erste Multimediainhalt wird unverändert über die erste Ausgabeeinheit ausgegeben.

Umfasst der erste Multimediainhalt beispielsweise eine erste Audio- und Videoinformation und der zweite Multimediainhalt eine zweite Audio- und Videoinformation, dann kann das Ausgabekriterium den dritten Multimediainhalt identisch zu dem zweiten Multimediainhalt und den vierten Multimediainhalt identisch zu dem ersten Multimediainhalt festlegen. Damit wird die zweite Audio- und Videoinformation nur dem Endgerät bereitgestellt und die erste Audio- und Videoinformation wird über die erste Ausgabeeinheit ausgegeben.

Ist der erste Multimediainhalt beispielsweise ein beliebiger Multimediainhalt und ist der zweite Multimediainhalt eine Nachricht, dann kann das Ausgabekriterium den dritten Multimediainhalt identisch zu dem zweiten Multimediainhalt und den vierten Multimediainhalt identisch zu dem ersten Multimediainhalt festlegen. Damit wird die Nachricht nur dem Endgerät bereitgestellt, und der erste Multimediainhalt wird über die erste Ausgabeeinheit ausgegeben.

Ist der erste Multimediainhalt beispielsweise ein beliebiger Multimediainhalt und der zweite Multimediainhalt umfasst nur Text, Daten, oder EPG Information, dann kann das Ausgabekriterium den dritten Multimediainhalt identisch zu dem zweiten Multimediainhalt und den vierten Multimediainhalt als Overlay-Ausgabe des zweiten Multimediainhalts über dem ersten Multimediainhalt festlegen. Damit wird die textuelle Information dem Endgerät bereitgestellt und zusätzlich über die erste Ausgabeeinheit ausgegeben.

Eine Ausgestaltung ist es, dass eine zweite Ausgabeeinheit in dem Endgerät integriert ist oder an das Endgerät angeschlossen ist.

Eine andere Ausgestaltung ist es, dass der zweite Multimediainhalt angefordert wird.

Hiermit ist der Vorteil gegeben, dass eine Anforderung des zweiten Multimediainhalts erfolgt, nachdem eine Anforderung für den zweiten Multimediainhalt erkannt wurde. Liegt der zweite Multimediainhalt beispielsweise bereits als Antennenempfangssignal, als Kabeleingangssignal oder als Teil eines MPEG- kodierten Informationsstromes vor, so ist diese Anforderung entbehrlich. Insbesondere im IPTV Falle, ist eine solche explizite Anforderung aber i. a. erforderlich und kann zum Beispiel durch Aussenden eines IGMP Kommandos erfolgen.

Eine andere Weiterbildung ist es, dass der zweite Multimediainhalt über eine Schnittstelle von einem Netz empfangen wird oder von einer lokalen Wiedergabeeinheit bereitgestellt wird.

Hiermit ist der Vorteil gegeben, dass der zweite Multimediainhalt über eine Vielzahl von Quellen zur Verfügung gestellt werden kann.
So kann der zweite Multimediainhalt über eine Netzschnittstelle von einer externen Einrichtung empfangen werden. Beispielsweise kann der zweite Multimediainhalt über ein IP- basiertes Netz, über ein Kabelfernsehnetz oder über ein terrestrisches oder Satelliten-gestütztes Broadcast -Netz empfangen werden.
Ebenso kann der zweite Multimediainhalt aber auch von einer lokalen Wiedergabeeinheit, wie z. B. einem CD, DVD oder blu-ray Player, oder von einer lokalen Wiedergabe- und Aufzeichnungseinheit, wie z. B. einem Festplattenrecorder oder einem lokalem PVR, bereitgestellt werden.

Eine weitere Ausgestaltung ist dadurch gegeben, dass der erste Multimediainhalt über eine Schnittstelle von einem Netz empfangen wird.

So kann der erste Multimediainhalt vorteilhaft nicht nur von einem beweglichen beispielsweise optischen Datenträger oder einem beispielsweise lokalen Speichermedium bereitgestellt werden, sondern vorteilhaft über ein Netz, beispielsweise ein Kommunikationsnetz, ein Verteilnetz, ein Multicast-Verteilnetz, ein Broadcast- Verteilnetz, ein Radio oder TV Verteilnetz empfangen werden. Hierbei kann der Empfang beispielsweise über Antenne via terrestrischer Übertragung oder via Satellit erfolgen kann, über TV Kabelanschluss oder Telefonleitung, über DSL, LAN, WLAN, oder über ein Mobilfunknetz.

Eine weitere Ausführungsform ist es, dass der dritte Multimediainhalt in Abhängigkeit von einer Eigenschaft des Endgeräts und/oder von einem Übertragungsweg zu dem Endgerät aufbereitet und bereitgestellt wird.

Hiermit ist der Vorteil verbunden, dass die Eigenschaften des Endgeräts, beispielsweise die Größe seiner Ausgabeeinheit für Video-Inhalte, also Bildschirmgröße oder Displaygröße, die Anforderungen an Auflösung und die Anforderungen an die Kodierung des Audio- und /oder Videoanteils des dritten Multimediainhalts, die Verarbeitungsleistung des Endgeräts und/oder seine Speicherfähigkeit berücksichtigt werden. Auch können Besonderheiten einer Übertragungsstrecke, wie verfügbare Bandbreite und Übertragungsqualität Berücksichtigung finden. Der dritte Multimediainhalt kann insbesondere hinsichtlich der Kodierung an die Bedürfnisse des Endgeräts und/oder der Übertragungsstrecke angepasst werden. Ebenso kann der dritte Multimediainhalt jedoch auch hinsichtlich seines Inhalts angepasst werden, indem z. B. nicht über das Endgerät darstellbare Information entfernt wird oder darstellbarer Inhalt auf eine für die Ausgabeeinheit des Endgeräts angemessene Schriftgröße, Seitenanzahl, Fenstergröße usw. angepasst wird.

Eine andere Ausführungsform ist es, dass der vierte Multimediainhalt in Abhängigkeit von einer Eigenschaft der ersten Ausgabeeinheit und/oder von einem Übertragungsweg zu der ersten Ausgabeeinheit aufbereitet wird.

Hiermit ergibt sich der Vorteil einer Anpassung an Ausgabeeinheiten mit unterschiedlichen Schnittstellen, wie insbesondere beispielsweise optische, elektrische, A/V, HDMI Schnittstellen.

Ebenfalls eine Ausführungsform ist es, dass das Ausgabekriterium ermittelt wird anhand von mindestens einer der folgenden Eigenschaften:
- einer Eigenschaft des Endgeräts
- einer Eigenschaft der ersten Ausgabeeinheit
- einer Betriebsart des Endgeräts
- einer Betriebsart der ersten Ausgabeeinheit
- einer Eigenschaft eines Übertragungswegs zu dem Endgerät
- einer Eigenschaft eines Übertragungswegs zu der ersten Ausgabeeinheit

Hierdurch werden der dritte und ggf. der vierte Multimediainhalt beispielsweise auch in Abhängigkeit von Gerätetyp und/oder Betriebsweise des Endgeräts und/oder von Gerätetyp und/oder Betriebsweise des ersten Ausgabegeräts und/oder vom Übertragungsweg zu dem Endgerät und/oder vom Übertragungsweg zu der ersten Ausgabeeinheit gebildet. So können vorteilhaft beispielsweise HD -fähige Endgerät oder HD -fähige erste Ausgabeeinheiten automatisch berücksichtigt werden zur Ausgabe von Multimediainhalten in HD -Qualität, insbesondere zur Ausgabe eines dritten bzw. vierten Multimediainhalts in HD-Qualität. Ebenfalls können beispielsweise Endgeräte mit Mehrkanal-Audiounterstützung oder erste Ausgabeeinheiten mit Mehrkanal-Audiounterstützung automatisch berücksichtigt werden zur Ausgabe von Multimediainhalten in Stereo- oder Raumklangqualität, insbesondere zur Ausgabe eines dritten bzw. vierten Multimediainhalts in Stereo- oder Raumklangqualität.

Eine weitere Ausführungsform ist es, dass eine Überwachung einer Kommunikation zu dem Endgerät durchgeführt wird, wobei das Ausgabekriterium anhand eines Ergebnisses der Überwachung ermittelt wird.

Die Überwachung kann hierbei beispielsweise auf einer physikalischen Ebene einer Verbindung, auf einer Ebene eines protokollgestützten Nachrichtenaustauschs innerhalb eines Protokollstacks und/oder auf einer Ebene einer Applikation erfolgen. Ein Ergebnis der Überwachung der Kommunikation zu dem Endgerät kann insbesondere sein, dass keine Kommunikation oder eine zu stark gestörte Kommunikation vorliegt oder eine einwandfreie oder ausreichend ungestörte Kommunikation wieder vorliegt. Abhängig von dem Ergebnis der Überwachung kann insbesondere vorteilhaft automatisch geschlossen werden, ob das Endgerät zum Empfang bzw. Entgegennahme des dritten Multimediainhalts zur Verfügung steht. Ist der zweite Multimediainhalt beispielsweise ein Videotext und ist die Kommunikation mit dem Endgerät hinreichend stark gestört, dann kann das Ausgabekriterium vorteilhaft so ermittelt werden, dass eine Videotextausgabe beispielsweise als Overlay oder als Fenster über die erste Ausgabeeinheit erfolgt. Ist die Kommunikation mit dem Endgerät dagegen später wieder hinreichend ungestört oder einwandfrei, dann kann das Ausgabekriterium vorteilhaft so ermittelt werden, dass eine Videotextausgabe beispielsweise als Overlay oder als Fenster über die erste Ausgabeeinheit automatisch nicht weiter erfolgt, dafür aber eine Bereitstellung des Videotexts für das Endgerät.

Ebenfalls ist es eine weitere Ausführungsform, dass die Überwachung eine Empfangssignalstärke und/oder eine Übertragungsqualität umfasst.

Ist das Endgerät beispielsweise ein mobiles Endgerät und ist die erste Ausgabeeinheit im Wohnzimmer einer Wohnung an ein stationäres Endgerät, z. B. eine Set Top Box einer IPTV Fernsehlösung, angeschlossen, so kann die Überwachung eine direkte Kommunikation zwischen dem stationären Endgerät und dem mobilen Endgerät betreffen. Hierbei kann die Kommunikation beispielsweise auf Basis von Infrarotsignalen, Bluetooth und/oder WLAN erfolgen. Kommt das mobile Endgerät hierbei in ausreichende Nähe des stationären Endgeräts, z. B. dadurch dass der Nutzer das mobile Endgerät mit sich führt und das Wohnzimmer betritt, dann kann dies beispielsweise vorteilhaft durch einfache Überwachung der Empfangssignalstärke in dem stationären Endgerät offenbar werden. Hierauf wird das Ausgabekriterium ermittelt, und es werden anhand des Ausgabekriteriums der dritte und ggf. der vierte Multimediainhalt gebildet und dem mobilen Endgerät bereitgestellt bzw. ggf. über die erste Ausgabeeinheit ausgegeben. Gerät das mobile Endgerät hierbei außerhalb ausreichender Nähe zu dem stationären Endgerät, z. B. dadurch, dass der Nutzer des mobilen Endgeräts das mobile Endgerät mit sich führt und das Wohnzimmer verlässt, dann kann dies ebenfalls beispielsweise vorteilhaft durch einfache Überwachung der Empfangssignalstärke in dem stationären Endgerät offenbar werden. Hierauf wird das Ausgabekriterium neu ermittelt, und es werden anhand des Ausgabekriteriums ein neuer dritter und ggf. ein neuer vierter Multimediainhalt gebildet und dem mobilen Endgerät bereitgestellt bzw. über die erste Ausgabeeinheit ausgegeben. Ist der erste Multimediainhalt beispielsweise ein Video und der zweite Multimediainhalt ein Videotext, dann können bei ausreichender Kommunikation mit dem mobilen Endgerät der Videotext automatisch als dritter Multimediainhalt über das mobile Endgerät und das Video über die erste Ausgabeeinheit ausgegeben werden. Andernfalls kann das Video mit dem Videotext als Overlay als neuer vierter Multimediainhalt automatisch über die erste Ausgabeeinheit ausgegeben werden.

Eine andere Weiterbildung ist es, dass der zweite Multimediainhalt mindestens eine der folgenden Informationen umfasst:
- eine Tonspurinformation in einer für den Multimediainhalt verfügbaren Sprache
- eine Untertitelinformation für den ersten Multimediainhalt
- eine Videotextinformation
- eine Programminformation
- eine Information eines interaktiven Dialogs
- eine Information eines Informationsdienstes

Hierdurch ist der Vorteil gegeben, dass die aufgeführten Zusatzinformationen über beispielsweise ein mobiles Endgerät oder einen PC ausgegeben werden. Hiermit kann sich eine Ausgabe über die erste Ausgabeeinheit erübrigen, so dass störender Platzverbrauch auf der ersten Ausgabeeinheit oder Einschränkungen der Ausgabequalität durch Overlays vermieden werden können. Ebenfalls vorteilhaft ist, dass ein Nutzer in dem Falle, in dem eine Gruppe von Nutzern gleichzeitig und gemeinsam die erste Ausgabeeinheit nutzt und in dem der Nutzer eine der genannten Zusatzinformationen benötigt, die anderen Nutzer der Gruppe von Nutzern nicht mit von ihm benötigten Informationen stört. Insbesondere eine zweite Synchronsprache kann beispielsweise vorteilhaft über ein mobiles Endgerät individuell für einen Nutzer aus der Gruppe von Nutzern bereitgestellt werden, ohne dass diese die weiteren Nutzer stört.

Eine andere Weiterbildung ist es, dass das Ausgabekriterium abhängig davon ermittelt wird, ob der zweite Multimediainhalt alternative Zusatzinformation zu dem ersten Multimediainhalt darstellt oder umfasst.

Insbesondere ist hierbei eine weitere Audiospur zum ersten Multimediainhalt oder eine weitere Synchronsprache zum ersten Multimediainhalt als alternative Zusatzinformation zu dem ersten Multimediainhalt anzusehen. Alternative Zusatzinformation zu dem ersten Multimediainhalt zeichnet sich dadurch aus, dass sie nicht sinnvoll gleichzeitig zu dem ersten Multimediainhalt über eine Ausgabeeinheit ausgegeben werden kann. So wird das Ausgabekriterium bei Anforderung von alternativer Zusatzinformation so ermittelt, dass eine gleichzeitige Ausgabe des ersten Multimediainhalts und des alternativen Zusatzinhalts über die erste Ausgabeeinheit nicht vorgenommen wird. Dagegen kann beispielsweise nach einer Dienstanforderung für einen alternativen Zusatzinhalt, welcher eine alternative Synchronsprache zum ersten Multimediainhalt darstellt, vorteilhaft eine Bereitstellung des alternativen Zusatzinhalts in Form des dritten Multimediainhalts für das Endgerät gleichzeitig mit einer Ausgabe des ersten Multimediainhalts in Form des vierten Multimediainhalts über die erste Ausgabeeinheit erfolgen. Im Falle einer Überwachung der Kommunikation zu dem Endgerät kann ferner beispielsweise bei Störung / Verlust der Kommunikation die Bereitstellung des alternativen Zusatzinhalts für das Endgerät temporär vermieden werden. Demgegenüber kann eine Untertitelausgabe bei Störung / Verlust der Kommunikation zu dem Endgerät zu einer Overlay-Ausgabe der Untertitelinformation auf dem ersten Ausgabegerät führen.

Ein anderes Ausführungsbeispiel ist es, dass der zweite Multimediainhalt als Fenster oder Overlay an die erste Ausgabeeinheit ausgegeben wird.

Dies ist beispielsweise dann vorteilhaft, wenn eine Ausgabemöglichkeit für den zweiten Multimediainhalt über das Endgerät wegen gestörter Kommunikation zu dem Endgerät fehlt und wenn der zweite Multimediainhalt nicht alternative Zusatzinformation zu dem vierten Multimediainhalt ist. In diesen Fällen kann der zweite Multimediainhalt beispielsweise als Overlay über die erste Ausgabeeinheit ausgegeben werden.

Ebenso ist es eine Weiterbildung, dass der zweite Multimediainhalt verworfen wird, wenn die Kommunikation mit dem Endgerät gestört ist und wenn der zweite Multimediainhalt alternative Zusatzinformation zu dem ersten Multimediainhalt darstellt.

Wenn eine Ausgabemöglichkeit über das Endgerät wegen gestörter Kommunikation fehlt und wenn der zweite Multimediainhalt alternative Zusatzinformation wie zum Beispiel eine zweite Audiospur zu dem ersten Multimediainhalt ist, kann der zweite Multimediainhalt nicht zugleich mit dem ersten Multimediainhalt über die erste Ausgabeeinheit ausgegeben werden. In diesem Falle kann der zweite Multimediainhalt vorteilhaft verworfen werden, wodurch Ressourcen, wie beispielsweise Verarbeitungsleistung, Speicherbedarf und Kommunikationslast eingespart werden.

Ein weiteres Ausführungsbeispiel ist es, dass der dritte Multimediainhalt oder der vierte Multimediainhalt mit einer Verzögerung beaufschlagt wird.

Hiermit ist der Vorteil gegeben, dass bei fehlender oder nicht ausreichender Synchronität zwischen dem dritten Multimediainhalt und dem vierten Multimediainhalt, insbesondere bei fehlender oder nicht ausreichender Lippensynchronität, diese, sofern erforderlich, per automatischer oder manueller Einstellung für den Nutzer des Endgeräts (z. B. einem Handheld) hergestellt werden kann. Beispielsweise kann der Nutzer per Bedienereingabe das Videosignal und Audiosignal auf dem ersten Ausgabegerät so stark gegenüber seinem für das Endgerät bereitgestellten Audiosignal, beispielsweise einer weiteren Synchronsprache, zeitlich verschieben, bis sich für ihn ausreichende Synchronität, insbesondere ausreichende Lippensynchronität, ergibt. Hierbei wird die Verzögerung durch verzögerte Ausgabe des vierten Multimediainhalts an das erste Ausgabegerät erreicht oder durch verzögerte Bereitstellung des dritten Multimediainhalts für das Endgerät. Ist eine passende Verzögerung gefunden, wird sie zur Ausgabe des vierten Multimediainhalts und zur Bereitstellung des dritten Multimediainhalts als feste Verzögerung beibehalten.
Ebenso ist eine automatische Einstellung einer passenden Verzögerung möglich, bei der das Endgerät durch Vergleich des über das erste Ausgabegerät ausgegebenen akustischen Signals und des dem Endgerät bereitgestellten Signals eine Verzögerung misst und deren Ausgleich anfordert.

Eine andere Weiterbildung ist es, dass eine Dienstanforderung eines Nutzers der ersten Ausgabeeinheit oder des Endgeräts erkannt wird und dass das Ausgabekriterium anhand der Dienstanforderung ermittelt wird.

Hierbei kann eine Dienstanforderung das sofortige unbedingte Vertauschen der aktuellen Ausgaben über die erste Ausgabeeinheit und über das Endgerät betreffen. Hiermit wird auf Anforderung eines Nutzers die sofortige Ausgabe des bisherigen dritten Multimediainhalts als neuer vierter Multimediainhalt über die erste Ausgabeeinheit ermöglicht. Gleichzeitig kann vorteilhaft die Bereitstellung des bisherigen vierten Multimediainhalts als neuer dritter Multimediainhalt für das Endgerät ermöglicht werden.
Ebenso kann eine Dienstanforderung beispielsweise auch eine Bereitstellung einer zusätzlichen Synchronsprache in Form eines dritten Multimediainhalts betreffen, eine Bereitstellung eines anderen zusätzlichen Inhalts in Form eines dritten Multimediainhalts oder eine Informationsnachricht über den Eintritt vordefinierte Ereignisse in Form des dritten Multimediainhalts.
Eine erkannte Dienstanforderung führt zur Hinterlegung von Dienstanforderungsdaten. Diese Dienstanforderungsdaten beschreiben mindestens einen aktuell angeforderten Dienst. Das Ausgabekriterium wird anhand der Dienstanforderung durch Auswertung der Dienstanforderungsdaten ermittelt. Hierbei ist der Zeitpunkt der Ermittlung des Ausgabekriteriums bestimmt durch den Dienst selbst und / oder mit dem Dienst einhergehende Ereignisse. Ein solches Ereignis kann beispielsweise der Anfangszeitpunkt oder der Endzeitpunkt eines Werbeblocks innerhalb einer Fernsehsendung sein, das Eintreffen einer Nachricht, eine aktuelle Eingabe eines Nutzers an dem Endgerät oder an einem das erste Ausgabegerät steuernden Gerät.

Eine weitere Weiterbildung ist es, dass das Ausgabekriterium ermittelt wird, falls ein Anfang eines unerwünschten Inhaltsblocks in dem ersten Multimediainhalt und/oder ein Ende eines unerwünschten Inhaltsblocks in dem zweiten Multimediainhalt erkannt wird.

Hiermit wird einem Nutzer vorteilhaft insbesondere das Verdrängen von ihm weniger wichtigen oder unerwünschten Multimediainhalten auf eine bestimmte Ausgabeeinheit ermöglicht. Einem Nutzer weniger wichtige oder unerwünschte Multimediainhalte können beispielsweise ein Werbeblock, eine Wortbeitrag, eine Standbild, eine Musikbeitrag oder jeder andere abgrenzbare und detektierbare Teil eines Multimediainhalts sein. So kann ein Nutzer insbesondere einen Werbeblock als weniger wichtigen Multimediainhalt betrachten und ihn durch Anforderung eines entsprechenden Dienstes automatisch auf das Endgerät verdrängen. Hat der Nutzer den Dienst Werbeblockverdrängung auf das beispielsweise mobile Endgerät angefordert und schaut sich der Nutzer einen Spielfilm über die an eine Set Top Box angeschlossene großformatige erste Ausgabeeinheit an, dann erfolgt mit einer Erkennung eines Werbeblockanfangs in der Set Top Box automatisch die Bereitstellung des bisherigen vierten Multimediainhalts als neuer dritter Multimediainhalt. Als neuer vierter Multimediainhalt kann beispielsweise das zuvor dem mobilen Endgerät bereitgestellte Hauptmenü des IPTV Anbieters des Nutzers über die erste Ausgabeeinheit ausgegeben werden. Für die Dauer des Werbeblocks kann der Nutzer nun über die erste Ausgabeeinheit andere Dienste des IPTV Anbieters nutzen, beispielweise die Ausgabe eines anderen Multimediainhalts. Zugleich kann er den Werbeblock über das Endgerät verfolgen. Mit dem Erreichen des Endes der Werbeblocks wird die auf das Endgerät verdrängte Sendung wieder automatisch auf die erste Ausgabeeinheit geschaltet. Hierzu wird mit einer Erkennung eines Werbeblockendes in der Set Top Box automatisch die Ausgabe des bisherigen dritten Multimediainhalts als neuer vierter Multimediainhalt durchgeführt. Der unmittelbar zuvor als vierter Multimediainhalt ausgegebene andere Multimediainhalt kann dem Endgerät als neuer dritter Multimediainhalt bereitgestellt werden.

Ebenfalls ist es eine Weiterbildung, dass der zweite Multimediainhalt eine Nachricht umfasst, welche empfangen wird oder aufgrund eines Ereignisses generiert wird.

Hierbei kann ein Nutzer beispielsweise eine Dienstanforderung stellen zur Benachrichtigung des Nutzers über ein bestimmtes Ereignis. Hierdurch wird ein zweiter Multimediainhalt angefordert, welcher eine Nachricht zur Benachrichtigung des Nutzers über das bestimmte Ereignis umfasst. Tritt das zu benachrichtigende Ereignis ein, so kann dies lokal beispielsweise in einer Set Top Box, an welche die zweite Ausgabeeinheit angeschlossen ist, erkannt werden oder durch eine Nachricht von extern, beispielsweise über eine Netzschnittstelle der Set Top Box mitgeteilt werden. Beides führt zur Verfügbarkeit des angeforderten zweiten Multimediainhalts in der Set Top Box. Daraufhin wird das Ausgabekriterium zumindest anhand des ersten und des zweiten Multimediainhalts ermittelt, worauf vorteilhaft die Benachrichtigung des Nutzers erfolgt über den dritten und/oder vierten Multimediainhalt. Insbesondere kann hierdurch vorteilhaft eine dem Nutzer und dem Ereignis besonders angemessene Benachrichtigung erfolgen. So können beispielsweise unwichtige Ereignisse in einfacher Weise nur über das Endgerät oder nur über die erste Ausgabeeinheit benachrichtigt werden, wohingegen wichtige Ereignisse sowohl über das Endgerät als auch über die erste Ausgabeeinheit benachrichtigt werden können.

Eine andere Weiterbildung besteht darin, dass die Nachricht einen Beginn eines Werbeblocks des ersten Multimediainhalts, ein Ende eines Werbeblocks des ersten Multimediainhalts und/oder einen Sucherfolg nach einem vorkonfigurierten Ausdruck betrifft.

Hiermit ist der Vorteil verbunden, dass ein Nutzer beispielsweise mit Hilfe seines mobilen Endgeräts über Werbepausen des ihn aktuell interessierenden Fernsehprogramms informiert werden kann. Auch kann der Nutzer vorteilhaft über Sucherfolge von ihn generell interessierenden Themen informiert werden. Hierbei ist die Information jeweils aktuell und erreicht den Nutzer, sofern die Kommunikation mit dem Endgerät möglich ist. Zusätzlich zu der Nachricht oder nach der Nachricht kann dem Endgerät auch ein relevanter Multimediainhalt bereitgestellt werden. So kann dem Endgerät beispielsweise nach einer Werbepause der erste Multimediainhalt in Form des dritten Multimediainhalts bereitgestellt werden. Ebenfalls kann dem Endgerät beispielsweise nach einem Sucherfolg ein mit dem Sucherfolg in Beziehung stehender Multimediainhalt in Form des dritten Multimediainhalts bereitgestellt werden. Insbesondere kann hierbei eine Suche in als EPG oder ESG bereitgestellten Daten erfolgen. Beispielsweise könnte ein für die Suche vorkonfigurierter Ausdruck der Name eines Schauspielers oder Fernsehmoderators sein, welcher von einem Nutzer über eine Bedienerschnittstelle eingegeben wurde. Wird der Name beispielsweise nach einer Aktualisierung der EPG bzw. ESG Daten gefunden, dann kann zusätzlich zu der Nachricht, welche den Sucherfolg nach dem vorkonfigurierten Ausdruck betrifft auch das Programm, der Multimediainhalt oder der Kanal als dritter Multimediainhalt bereitgestellt werden, bezüglich dessen der Schauspieler oder Fernsehmoderator gemäß EPG bzw. ESG Erwähnung gefunden hat.

Eine andere Ausführungsform ist es, dass der zweite Multimediainhalt eine Aufzeichnung des ersten Multimediainhalts ist.

Hierdurch ergibt sich der Vorteil, dass Trickplay Optionen wie zum Beispiel schneller Vorlauf, schneller Rücklauf und zeitversetzte Ausgabe in verschiedenen Geschwindigkeiten für den ersten Multimediainhalt beispielsweise über das Endgerät in Form des dritten Multimediainhalts verfügbar sind und gleichzeitig eine kontinuierliche Ausgabe des ersten Multimediainhalts in Form des vierten Multimediainhalts über die erste Ausgabeeinheit erfolgt. So kann ein einzelner Nutzer einer Gruppe von Nutzern beispielsweise eine Szene des ersten Multimediainhalts nochmals in Zeitlupe über das Endgerät anschauen, während die anderen Nutzer der Gruppe den Multimediainhalt davon ungestört über die erste Ausgabeeinheit weiterverfolgen. Hält der Nutzer die wiederholte Szene für mitteilenswert, kann sie auf Anforderung des Nutzers in Form eines neuen vierten Multimediainhalts über die erste Ausgabeeinheit ausgegeben werden. Eine Funktion zur Aufzeichnung und zeitversetzten Ausgabe kann hierbei über einen lokalen Personal Video Recorder (PVR) oder über einen netzbasierten PVR erfolgen.

Eine andere Weiterbildung ist es, dass das Endgerät authentifiziert wird.

Hiermit ist der Vorteil verbunden, dass insbesondere nur ein berechtigtes Endgerät eine Bereitstellung des dritten Multimediainhalts erlangt. Alternativ oder zusätzlich kann ebenfalls ein Nutzer des Endgeräts authentifiziert werden.

Eine weitere Weiterbildung ist es, dass eine Bedienoberfläche bereitgestellt wird zur Aktivierung eines den dritten Multimediainhalt betreffenden Dienstes.

Hiermit wird einem Nutzer vorteilhaft eine Bedienoberfläche bereitgestellt zur Aktivierung und Deaktivierung zumindest der voran stehend diskutierten neuen Dienste. Die Bedienoberfläche ist insbesondere für das Endgerät verfügbar und ermöglicht die einfache Bedienung von Diensten zur Ausgabe des ersten und des zweiten Multimediainhalts in Form des dritten und ggf. vierten Multimediainhalts über das Endgerät und die erste Ausgabeeinheit. Die Bedienoberfläche kann darüber hinaus ebenfalls vorteilhaft an der Bedienschnittstelle des Geräts verfügbar sein, an welches die erste Ausgabeeinheit angeschlossen ist, beispielsweise einer Set Top Box einer IPTV Fernsehlösung.

Eine weitere Weiterbildung ist es, dass der Dienst mindestens eine der folgenden Funktionen bereitstellt:
- eine zeitversetzte Ausgabe des ersten Multimediainhalts als dritter Multimediainhalt über das Endgerät
- eine Ausgabe einer Video-Information, einer Audio-Information, eines Videotextes, einer EPG Information, einer ESG Information und /oder einer Now and Next Information als dritter Multimediainhalt über das Endgerät
- eine unbedingte Ausgabe des dritten Multimediainhalts in Form des vierten Multimediainhalts an die erste Ausgabeeinheit
- eine Ausgabe des dritten Multimediainhalts in Form des vierten Multimediainhalts an die erste Ausgabeeinheit bei Erkennung eines Anfangs oder eines Endes eines Werbeblocks in dem ersten Multimediainhalt oder in dem zweiten Multimediainhalt
- eine Ausgabe einer Nachricht als dritter Multimediainhalt über das Endgerät bei Erkennung eines Anfangs oder eines Endes eines Werbeblocks in dem ersten Multimediainhalt oder in dem zweiten Multimediainhalt
- eine Ausgabe einer Nachricht als dritter Multimediainhalt über das Endgerät bei Erkennung eines Sucherfolgs für einen vorkonfigurierten Ausdruck.

Hierbei bezeichnet eine Now and Next Information eine einem EPG ähnliche Information, allerdings ohne Übersichtsdarstellung und somit eingeschränkt auf das aktuelle und nachfolgende Programm eines gewählten Senders oder TV Kanals. Die hierbei dargestellte Programminformation beinhaltet i. a. den Titel, die Uhrzeit und die Dauer der Sendungen. Zusätzlich können zu den Programmen kurze Beschreibungen des Inhalts angezeigt werden.

Zur Lösung der Aufgabe wird ebenfalls eine Vorrichtung zur selektiven Ausgabe von Multimediainhalten über ein Endgerät angegeben mit
- einer Schnittstelleneinheit, die einen ersten Multimediainhalt an eine erste Ausgabeeinheit ausgibt;
- einer Verarbeitungseinheit, die eine Anforderung für einen zweiten Multimediainhalt erkennt und die anhand des ersten Multimediainhalts und zumindest der Anforderung für den zweiten Multimediainhalt ein Ausgabekriterium ermittelt; und
- einer ersten Bereitstellungseinheit, die anhand des ermittelten Ausgabekriteriums aus dem ersten Multimediainhalt und aus dem zweiten Multimediainhalt einen dritten Multimediainhalt bildet zur Bereitstellung für das Endgerät.

Gemäß einer Weiterbildung weist die Vorrichtung eine zweite Bereitstellungseinheit auf, die anhand des ermittelten Ausgabekriteriums aus dem ersten Multimediainhalt und aus dem zweiten Multimediainhalt einen vierten Multimediainhalt bildet zur Ausgabe an die erste Ausgabeeinheit.

Gemäß einer anderen Ausführungsform der Vorrichtung ist eine Überwachungseinheit vorgesehen, die eine Überwachung einer Kommunikation zu dem Endgerät durchführt, wobei das Ausgabekriterium anhand eines Ergebnisses der Überwachung ermittelt wird.

Gemäß einem anderen Ausführungsbeispiel besitzt die Vorrichtung eine erste Verzögerungseinheit, die den dritten Multimediainhalt mit einer Verzögerung beaufschlagt, und/oder eine zweite Verzögerungseinheit, die den ersten Multimediainhalt oder den vierten Multimediainhalt mit einer Verzögerung beaufschlagt.

Zur Lösung der Aufgabe wird ebenfalls ein System zur selektiven Ausgabe von Multimediainhalten über ein Endgerät angegeben umfassend die Vorrichtung, das Endgerät und die erste Ausgabeeinheit.

Ausführungsbeispiele der Erfindung werden anhand der folgenden Figuren dargestellt:
- Fig.1: zeigt ein Flussdiagramm wesentlicher Verfahrensschritte eines ersten Ausführungsbeispiels;
- Fig.2: zeigt eine vereinfachte Blockdarstellung eines Ausführungsbeispiels zur Bereitstellung einer zusätzlichen Synchronsprache;
- Fig.3: zeigt eine vereinfachte Blockdarstellung eines Ausführungsbeispiels zur Bereitstellung von Text und/oder Daten;
- Fig.4: zeigt eine vereinfachte Blockdarstellung eines Ausführungsbeispiels zur gleichzeitigen und wechselweisen Bereitstellung und Ausgabe zweier Fernsehprogramme;
- Fig.5: zeigt eine vereinfachte Blockdarstellung eines Ausführungsbeispiels zur ereignisgetriebenen Bereitstellung von Nachrichten;

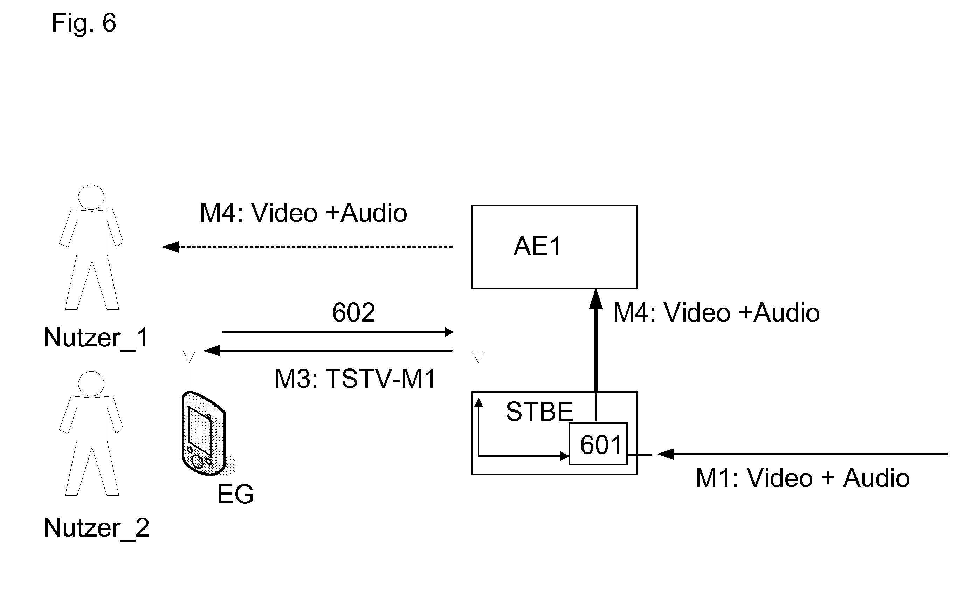

- Fig.6: zeigt eine vereinfachte Blockdarstellung eines Ausführungsbeispiels zur Bereitstellung von zeitversetztem Fernsehen;
- Fig.7: zeigt eine vereinfachte Darstellung eines Auswahlmenüs von Diensten für mehr als eine Ausgabeeinheit;
- Fig.8: zeigt eine vereinfachte Blockdarstellung eines Ausführungsbeispiels zur Veranschaulichung einer Vorrichtung zur selektiven Ausgabe von Multimediainhalten;
- Fig.9: zeigt eine vereinfachte Blockdarstellung eines weiteren Ausführungsbeispiels zur Veranschaulichung einer Vorrichtung zur selektiven Ausgabe von Multimediainhalten;

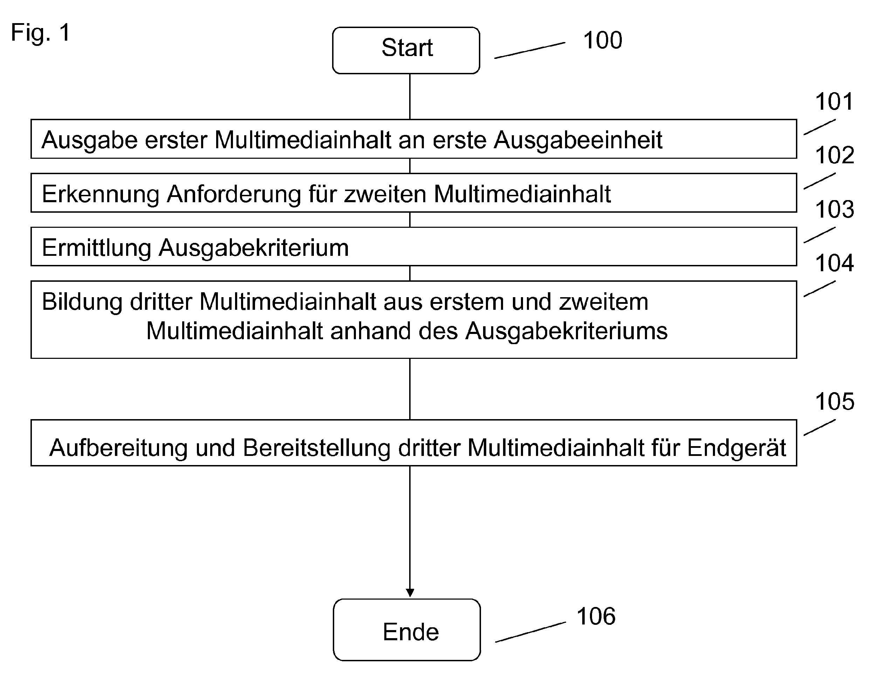

**Fig.1** zeigt ein Flussdiagramm wesentlicher Verfahrensschritte eines ersten Ausführungsbeispiels zur selektiven Ausgabe von Multimediainhalten über ein Endgerät. Nach einem Start (Schritt 100) erfolgt in einem Schritt 101 eine Ausgabe eines ersten Multimediainhalts an eine erste Ausgabeeinheit. Die erste Ausgabeeinheit kann hierbei eine integrierte Einheit eines Verfahrensschritte durchführenden Geräts sein oder eine von diesem Gerät separate externe Einheit. Insbesondere kann die erste Ausgabeeinheit eine für Audio- und/oder Videoinhalte geeignete Ausgabeeinheit sein, wie z. B. ein Fernsehgerät, ein TV Monitor, eine Stereo-Anlage. Das Verfahrensschritte durchführende Gerät kann beispielsweise eine Set Top Box, ein Fernsehgerät oder ein DVD Player sein. Der erste Multimediainhalt kann über ein Netz empfangen werden oder ohne Netzzugriff bereits lokal zur Ausgabe bereitstehen. Die Ausgabe des ersten Multimediainhalts erfolgt i. a. aufgrund einer Bedienaktion eines Nutzers. Diese kann durch eine Bedienhandlung an einer Fernbedienungseinheit oder an einer geräteintegrierten Bedieneinheit erfolgen oder über sonstige Handlungen des Nutzers, wie z. B. über ein Einlegen einer CD oder DVD in eine Lese- und/oder Abspieleinheit.

In einem Schritt 102 wird sodann i. a. während der Ausgabe des ersten Multimediainhalts eine Anforderung eines zweiten Multimediainhalts erkannt. Diese Anforderung kann von dem Endgerät stammen, welches mit dem Verfahrenschritte durchführenden Gerät in Kommunikation steht. Ebenso kann diese Anforderung jedoch auch über die Fernbedienungseinheit oder über die geräteintegrierte Bedieneinheit erfolgen. Die Anforderung des zweiten Multimediainhalts umfasst insbesondere Daten, die den zweiten Multimediainhalt und/oder den Zugriff auf den zweiten Multimediainhalt beschreiben. Typischerweise können lokal hinterlegte oder zugreifbare EPG oder ESG Daten vorhanden sein, aus denen eine Verfügbarkeit (z. B. Uhrzeit und TV-Kanal) des zweiten Multimediainhalts hervorgeht. Insbesondere EPG oder ESG Daten können weitere Informationen enthalten, aus denen ein Typ des zweiten Multimediainhalts oder weitere Information zu dem zweiten Multimediainhalt ersichtlich ist.

In einem Schritt 103 erfolgt eine Ermittlung eines Ausgabekriteriums auf Basis des ersten Multimediainhalts und zumindest der Anforderung des zweiten Multimediainhalts. Zu der Ermittlung des Ausgabekriteriums kann mithin beispielsweise alle den ersten Multimediainhalt beschreibende Information aus EPG oder ESG herangezogen werden, aber auch alle Information, die mit der oder für die Ausgabe des ersten Multimediainhalts verfügbar ist oder verfügbar wird, wie beispielsweise Anzahl verfügbarer Tonspuren, Videotext-Information, Bildmaterial, Videoinformation und/oder Toninformation. Das Ausgabekriterium bestimmt, welche auf Basis des ersten und zumindest der Anforderung des zweiten Multimediainhalts zu bildende Information für das Endgerät bereitgestellt werden soll. Eine Ermittlung des Ausgabekriteriums kann mit der Anforderung des zweiten Multimediainhalts erfolgen, sie kann ebenso mit der Verfügbarkeit des zweiten Multimediainhalts erfolgen. Auch kann die Ermittlung aufgrund von Ereignissen erfolgen. So kann beispielsweise ein Erreichen des Endes des ersten Multimediainhalts oder des zweiten Multimediainhalts, eine von einem Nutzer verursachte Anforderung eines von dem ersten und/oder dem zweiten Multimediainhalts verschiedenen Multimediainhalts, ein Beginn oder ein Ende einer Unterbrechung der Kommunikation mit dem Endgerät, ein Eintreffen einer Nachricht, eine Dienstanforderung oder die Rücknahme einer Dienstanforderung durch einen Nutzer, eine Änderung einer Zusammensetzung eines empfangenen Kabelnetzsignals, eine Änderung einer Zusammensetzung eines MPEG kodierten Signals, ein Beginn oder ein Ende einer Störung eines Empfangs des ersten oder des zweiten Multimediainhalts zu der Ermittlung des Ausgabekriteriums führen. Ebenfalls kann das Ausgabekriterium wiederholt in festem oder variablem zeitlichen Abstand ermittelt werden.

Steht das ermittelte Ausgabekriterium zur Verfügung und ist der zweite Multimediainhalt verfügbar, dann wird in einem Schritt 104 ein dritter Multimediainhalt aus dem ersten und dem zweiten Multimediainhalt gebildet gemäß dem ermittelten Ausgabekriterium. Eine Bildung des dritten Multimediainhalts kann insbesondere dynamisch mit dem Ausgabefortschritt des ersten und des zweiten Multimediainhalts erfolgen. Die Bildung des dritten Multimediainhalts kann ebenfalls schneller als der Ausgabefortschritt des ersten Multimediainhalts erfolgen. Dies kann insbesondere der Fall sein, wenn der erste und/oder der zweite Multimediainhalt bereits lokal vorliegen oder über mindestens einen Ladevorgang über eine ausreichend performante Netzschnittstelle verfügbar sind. Eine Bereitstellung des dritten Multimediainhalts kann über Streaming und oder über ein Laden erfolgen.

In einem Schritt 105 wird der dritte Multimediainhalt für das Endgerät in geeigneter Form aufbereitet. Eine Aufbereitung des dritten Multimediainhalts kann insbesondere eine Kodierung, eine Dekodierung und /oder eine Umkodierung hinsichtlich eines Video- und/oder eines Audioanteils des dritten Multimediainhalts umfassen. Im Hinblick auf eine dem Endgerät verfügbare Qualität des dritten Multimediainhalts kann die Aufbereitung des dritten Multimediainhalts insbesondere ein Zusetzen redundanter Information beispielsweise in Form von Check-Summen oder einer Forward Error Correction Kodierung (FEC) umfassen und/ oder eine Strukturierung in Informationsabschnitte unterschiedlicher Priorität beispielsweise in Form einer skalierbaren Kodierung. Ebenfalls kann die Aufbereitung des dritten Multimediainhalts eine Verschlüsselung umfassen. Der aufbereitete dritte Multimediainhalt wird dem Endgerät in dem Schritt 105 bereitgestellt. Eine Bereitstellung des aufbereiteten dritten Multimediainhalts kann beispielsweise durch unbedingte Übertragung an eine Adresse des Endgeräts und/oder durch ein Laden und/oder durch ein Streaming und/oder nach einer Anforderung durch das Endgerät erfolgen.

Das Verfahren endet in einem Schritt 106.

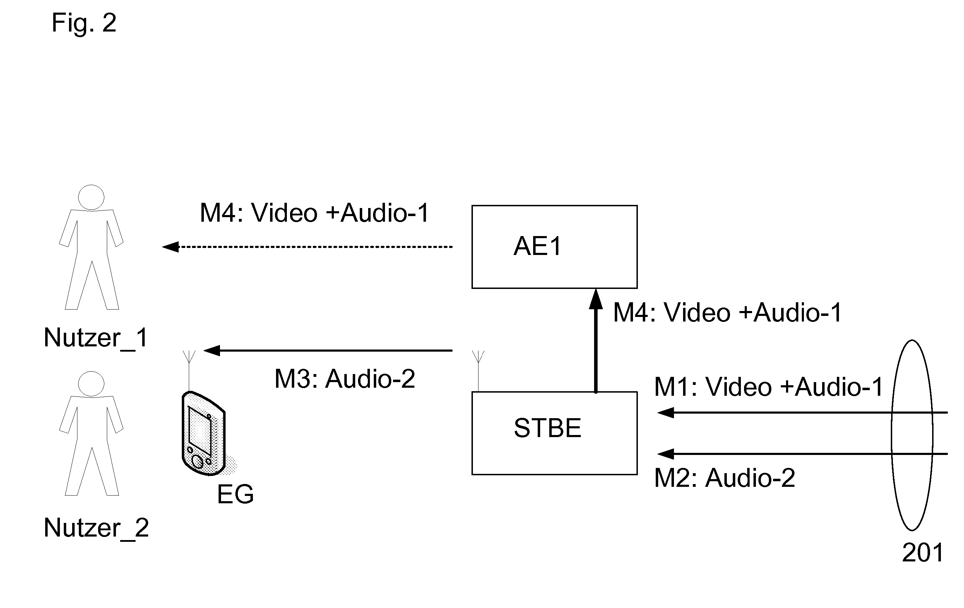

**Fig.2** zeigt eine vereinfachte Blockdarstellung eines Ausführungsbeispiels zur Bereitstellung einer zusätzlichen Synchronsprache. Gemäß dem Ausführungsbeispiel empfängt eine Set Top Box STBE einen Audio/Video-Inhalt 201 per Streaming. Der Audio/Video-Inhalt 201 kann hierbei beispielsweise über IP, als Kabelnetzsignal, Satellitensignal oder terrestrisches Antennensignal bereitgestellt sein. Nicht dargestellt ist, dass der Audio/Video-Inhalt 201 alternativ ebenso in der Set Top Box STBE gespeichert vorliegen kann. Insbesondere kann die Set Top Box STBE eine DVB-S, DVB-C, DVB-T konforme Set Top Box sein, eine Set Top Box für IPTV, ein Abspielgerät für eine DVD und/oder eine Blu-ray Disc oder ein PVR. Die Set Top Box STBE ist beispielsweise über eine Audio/Video Schnittstelle mit einer ersten Ausgabeeinheit AE1 verbunden. Hierbei kann die Audio/Video Schnittstelle insbesondere analog oder digital, z. B. eine HDMI Schnittstelle, sein. Die erste Ausgabeeinheit AE1 kann ein Fernsehgerät oder ein Bildschirm eines PC sein. Nicht dargestellt können die erste Ausgabeeinheit AE1 und die Set Top Box STBE auch in einem Gerät integriert sein. Die Set Top Box STBE steht zum Beispiel über eine Funkschnittstelle mit einem Endgerät EG in Verbindung. Hierbei kann die Funkschnittstelle beispielsweise eine WLAN oder Bluetooth basierte Schnittstelle sein. Das Endgerät EG kann ein Handheld-Gerät sein, wie zum Beispiel ein PDA, ein mobiles Telefon, ein intelligentes Telefon (smart phone), ein Musikspieler. Ein erster Nutzer Nutzer 1 und ein zweiter Nutzer 2 nutzen die erste Ausgabeeinheit AE1 zur Verfolgung des Audio/Video Inhalts 201. Zusätzlich steht ihnen hierfür das Endgerät EG zur Verfügung.

Der Audio/Video Inhalt 201 ist beispielsweise ein MPEGkonformer Datenstrom, welcher eine Video-Information, eine Audio-Information Audio-1 und eine Audio-Information Audio-2 umfasst. Hierbei betrifft die Audio Information Audio-1 beispielsweise eine deutsche Tonspur zu der Video-Information, und die Audio Information Audio-2 betrifft eine englische Tonspur, z. B. eine englische Synchronisation zu der Video-Information. Hierbei bezeichnet die englische Synchronisation des Multimediainhalts eine zu dem Audio/Video Inhalt passende, synchronisierte Tonspur in englischer Sprache. Ein erster Multimediainhalt M1 ist definiert durch die Video-Information und die Audio-Information Audio-1 und wird durch die Set Top Box STBE in Form des vierten Multimediainhalts M4 über die erste Ausgabeeinheit AE1 ausgegeben. Damit können der erste Nutzer Nutzer_1 und der zweite Nutzer Nutzer_2 den Audio/Video Inhalt 201 beispielsweise in deutscher Sprache verfolgen.

Insbesondere über das Endgerät EG steht dem ersten Nutzer Nutzer 1 und dem zweiten Nutzer Nutzer_2 ein Dienstangebot von Ausgabediensten zur Verfügung. Aus diesem Dienstangebot kann beispielsweise der zweite Nutzer Nutzer_2 eine Option "Audio englisch" auswählen. Dies hat zur Folge, dass eine Anforderung eines zweiten Multimediainhalts M2 in der Set Top Box STBE erkannt wird. Auf Basis des ersten Multimediainhalts M1 und der Anforderung des zweiten Multimediainhalts M2, sowie der Dienstanforderung eines Ausgabedienstes, ggf. zusätzlich auf Basis des zweiten Multimediainhalts, wird daraufhin in der Set Top Box STBE ein Ausgabekriterium ermittelt, welches zu einer Bereitstellung der Audio-Information Audio-2 für das Endgerät EG führt. Die Audio-Information Audio-2 wird daraufhin über die Funkschnittstelle in Form eines dritten Multimediainhalts M3 übertragen. Damit kann der zweite Nutzer Nutzer_2, der beispielsweise nicht deutsch, aber englisch spricht, den Video/Audio Inhalt 201 in der für ihn passenden Synchronsprache verfolgen, ohne den ersten Nutzer Nutzer_1 zu beinträchtigen.

Im Hinblick auf das Dienstangebot der Ausgabedienste kann die Set Top Box STBE eine Server-Funktion für Ausgabedienste bereitstellen, und das Endgerät EG kann eine zughörige Client-Funktion umfassen. Die Server-Funktion für Ausgabedienste kann der Client-Funktion des Endgeräts EG insbesondere mit dem Audio/Video Inhalt 201 verfügbare Information bereitstellen. Dies kann Information sein über die in einem beispielsweise MPEG kodierten Audio/Video Inhalt 201 enthaltenen Elementarströme wie zum Beispiel Video, Audio und Daten Elementarströme oder Information über zusätzlich verfügbare Kanäle und/oder mit den Elementarströmen und Kanälen verfügbare Ausgabedienste. Kann die Set Top Box STBE nur einen einzigen MPEG Datenstrom zugleich empfangen, dann können die zusätzlich verfügbaren Kanäle die mit diesem MPEG Datenstrom verfügbarer Kanäle, also beispielsweise Kanäle eines Bouquets, beschränkt sein.

Ausgabedienste können der Client-Funktion des Endgeräts EG via http angeboten werden. Ein hierfür zu benutzendes http Port kann beispielsweise auf der Set Top Box STBE konfiguriert sein. Dieser http Port muss der Client Funktion bekannt sein. Optional kann die Client-Funktion nach einer über eine Funkschnittstelle des Endgeräts EG verfügbaren Server-Funktion suchen. Dies kann zu einer Ausgabe einer Liste von verfügbaren Server-Funktionen führen, wenn zum Beispiel mehrere Set Top Boxen STBE in einem Haushalt vorhanden sind. Wird nur eine Server-Funktion gefunden, dann kann der Client automatisch eine Kommunikation mit dieser Server-Funktion herstellen, insbesondere dann, wenn bereits eine Zuordnung zu diesem Server besteht. Werden mehrere Server-Funktionen gefunden, dann kann der zweite Nutzer Nutzer_2 eine davon auswählen. Das Endgerät EG kann eine Browser-Funktion nutzen, um sich mit dem http Port der Server-Funktion zu verbinden. Insbesondere, wenn beispielsweise der zweite Nutzer Nutzer_2 die Option "Audio englisch" auswählt, dann empfängt die Server-Funktion die Anforderung des zweiten Multimediainhalts M2 via http, woraufhin nach Ermittlung des Ausgabekriteriums eine Funktion zur Bereitstellung der Audio-Information Audio-2 aufgerufen wird.

Wird der Audio/Video Inhalt über einen ersten Programmkanal empfangen und wird die englische Synchronsprache über das Endgerät EG ausgegeben, dann kann bei einem Wechsel zu einem anderen Programmkanal der Ausgabedienst weiterhin aktiv sein und unter Steuerung durch die Set Top Box STBE automatisch für eine Bereitstellung einer englischen Synchronsprache über das Endgerät EG führen, sofern der gewählte Programmkanal, die Option einer zusätzlichen englischen Synchronsprache bietet.

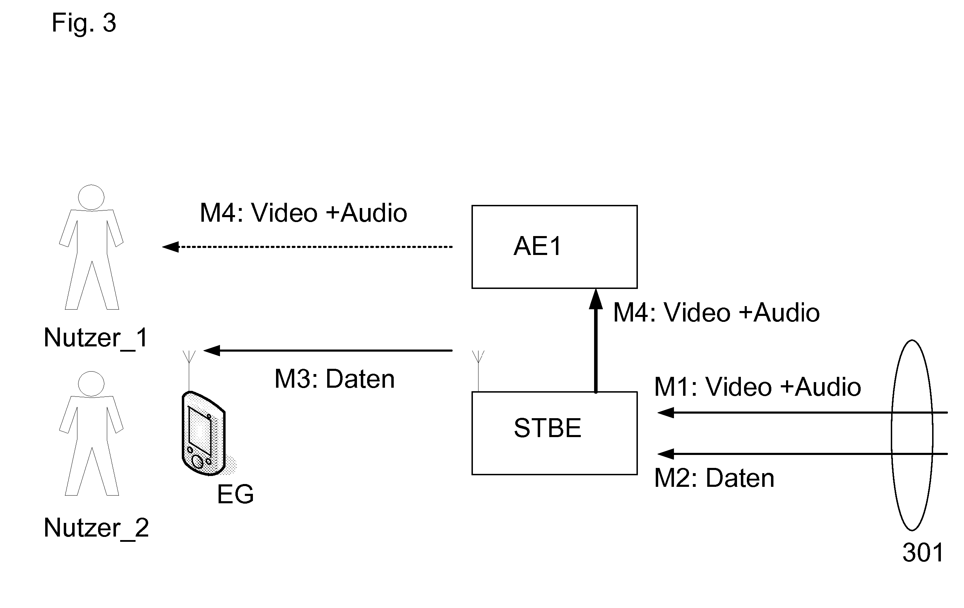

**Fig.3** zeigt eine vereinfachte Blockdarstellung eines Ausführungsbeispiels zur Bereitstellung von Text und/oder Daten. Gemäß dem Ausführungsbeispiel empfängt eine Set Top Box STBE einen Audio/Video-Inhalt 301 per Streaming. Der Audio/Video-Inhalt 301 kann hierbei beispielsweise über IP, als Kabelnetzsignal, Satellitensignal oder terrestrisches Antennensignal bereitgestellt sein. Die Set Top Box STBE ist beispielsweise über eine Audio/Video Schnittstelle mit einer ersten Ausgabeeinheit AE1 verbunden. Die Set Top Box STBE steht zum Beispiel über eine Funkschnittstelle mit einem Endgerät EG in Verbindung. Hierbei kann die Funkschnittstelle beispielsweise eine WLAN oder Bluetooth basierte Schnittstelle sein. Das Endgerät EG kann ein Handheld-Gerät sein, was im Folgenden angenommen sei. Ein erster Nutzer Nutzer_1 und/oder ein zweiter Nutzer_2 nutzen die erste Ausgabeeinheit AE1 zur Verfolgung des Audio/Video Inhalts 301. Zusätzlich steht ihnen hierfür das Endgerät EG zur Verfügung.

Der Audio/Video Inhalt 301 ist beispielsweise ein MPEGkonformer Datenstrom, welcher eine Video-Information, eine Audio-Information und eine Daten-Information umfasst. Hierbei betrifft die Dateninformation beispielsweise Untertitelinformation, Videotext, EPG, ESG, Now and Next Information und/oder eine andere Textinformation. Ein erster Multimediainhalt M1 ist definiert durch die Video-Information und die Audio-Information und wird durch die Set Top Box STBE in Form des vierten Multimediainhalts M4 über die erste Ausgabeeinheit AE1 ausgegeben. Damit können der erste Nutzer Nutzer_1 und der zweite Nutzer Nutzer_2 den Audio/Video Inhalt 301 verfolgen.

Insbesondere über das Handheld-Gerät steht dem ersten Nutzer Nutzer_1 und/oder dem zweiten Nutzer Nutzer_2 ein Dienstangebot von Ausgabediensten zur Verfügung. Aus diesem kann beispielsweise der zweite Nutzer Nutzer_2 eine Option "Videotext" oder eine Option "Now and Next" auswählen. Dies hat zur Folge, dass eine Anforderung eines zweiten Multimediainhalts M2 in der Set Top Box STBE erkannt wird. Auf Basis des ersten Multimediainhalts M1 und des zweiten Multimediainhalts M2 sowie der Dienstanforderung "Videotext" bzw. "Now and Next" wird daraufhin in der Set Top Box STBE ein Ausgabekriterium ermittelt, welches zu einer Bereitstellung der Videotext- bzw. Now and Next Information für das Endgerät EG führt. Die Videotext- bzw. Now and Next Information wird daraufhin über die Funkschnittstelle in Form eines dritten Multimediainhalts M3 übertragen. Damit kann beispielsweise der zweite Nutzer Nutzer_2 die Videotext- bzw. Now and Next Information über das Handheld-Gerät verfolgen, ohne den ersten Nutzer Nutzer_1 zu beinträchtigen. Das Handheld-Gerät steht dem zweiten Nutzer Nutzer_2 dabei auch für Nutzereingabe und Bedienereingaben zur Verfügung. Insbesondere kann der zweite Nutzer Nutzer_2 eine Navigation und in den bzw. eine Steuerung der Videotext bzw. Now and Next Ausgaben durchführen. Insbesondere kann eine Auswahl von Videotextseiten über das Handheld-Gerät, erfolgen.

In gleicher Weise kann der zweite Nutzer Nutzer_2 auch Eingaben für interaktive Anwendungen, wie z. B. Voting oder Information über Mitwirkende und/oder Mitspieler bei einer Veranstaltung, über das Handheld-Gerät machen, ohne dass hierdurch der erste Nutzer Nutzer_1 gestört würde. Hierzu kann der erste Nutzer Nutzer_1 einen Ausgabedienst anfordern, welcher bewirkt, dass alle ohne explizite Anforderung durch einen der Nutzer Nutzer_1 oder Nutzer_2 entstehenden Ausgaben von Informationsdiensten und interaktiven Anwendungen a priori dem Endgerät EG bereitgestellt werden.

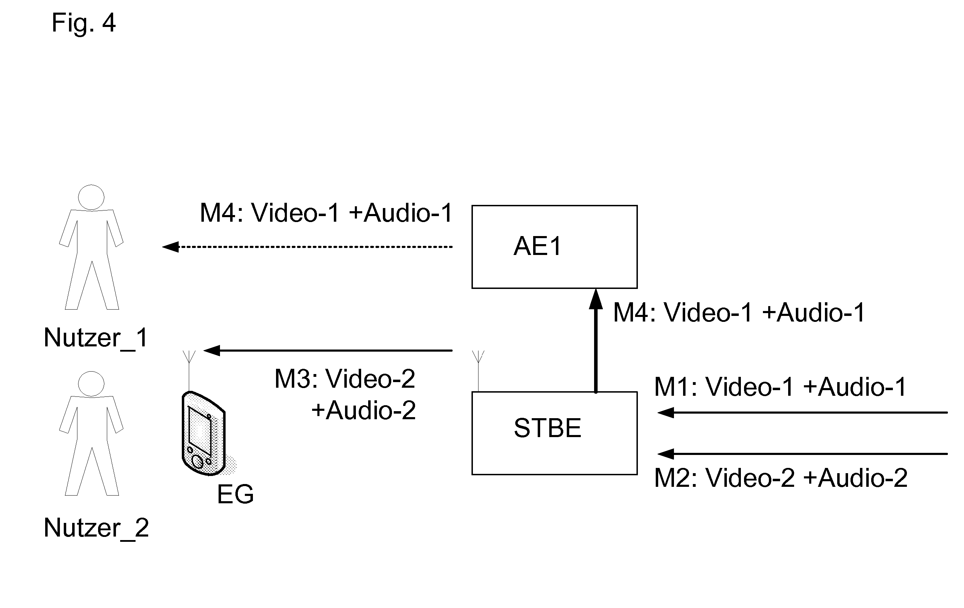

**Fig.4** zeigt eine vereinfachte Blockdarstellung eines Ausführungsbeispiels zur gleichzeitigen und wechselweisen Bereitstellung und Ausgabe zweier Fernsehprogramme. Gemäß dem Ausführungsbeispiel empfängt eine Set Top Box STBE einen ersten Multimediainhalt M1, bestehend aus Elementarströmen Video-1 und Audio-1, und einen zweiten Multimediainhalt M2, bestehend aus Elementarströmen Video-2 und Audio-2, per Streaming oder jeweils per Streaming. Insbesondere kann der der zweite Multimedianhalt M2 sowohl mit dem ersten Multimediainhalt M1 im gleichen Bouquet eines MPEG kodierten Datenstroms liegen als auch in einem davon separaten Bouquet. Der erste Multimediainhalt M1 und/oder der zweite Multimediainhalt M2 können hierbei beispielsweise über IP, als Kabelnetzsignal, Satellitensignal oder terrestrisches Antennensignal bereitgestellt sein. Die Set Top Box STBE ist beispielsweise über eine Audio/Video Schnittstelle mit einer ersten Ausgabeeinheit AE1 verbunden. Die Set Top Box STBE steht zum Beispiel über eine Funkschnittstelle mit einem Endgerät EG in Verbindung. Hierbei kann die Funkschnittstelle beispielsweise eine WLAN oder Bluetooth basierte Schnittstelle sein. Das Endgerät EG kann ein Handheld-Gerät sein. Ein erster Nutzer Nutzer_1 und/oder ein zweiter Nutzer_2 nutzen die erste Ausgabeeinheit AE1 sowie das Endgerät EG zur Verfolgung des ersten Multimediainhalts M1 und des zweiten Multimediainhalts M2. Hierzu wird der erste Multimediainhalt M1 in Form eines dritten Multimediainhalts M3 für das Endgerät EG bereitgestellt, und der erste Multimediainhalt M1 wird in Form eines vierten Multimediainhalts M4 über die erste Ausgabeeinheit AE1 ausgegeben. Damit können der erste Nutzer Nutzer_1 und/oder der zweite Nutzer Nutzer_2 den zweiten Multimediainhalt M2 über das Endgerät EG, insbesondere zum Beispiel über ein Handheld-Gerät, mitverfolgen oder überwachen und gleichzeitig den Multimediainhalt M1 als primären Multimediainhalt über die erste Ausgabeeinheit AE1 verfolgen.

Das vorstehend beschriebene Szenario der gleichzeitigen Ausgabe zweier Multimediainhalte kann beispielsweise dadurch erreicht werden, dass, nachdem der erste Multimediainhalt M1 über die erste Ausgabeeinheit AE1 ausgegeben wird, der erste Nutzer Nutzer_1 oder der zweite Nutzer Nutzer_2 beispielsweise über das Endgerät EG ein Dienstangebot von Ausgabediensten anfordert. Im Hinblick auf das Dienstangebot der Ausgabedienste kann die Set Top Box STBE eine Server-Funktion für Ausgabedienste bereitstellen, und das Endgerät EG kann eine zughörige Client-Funktion umfassen. Die Server-Funktion für Ausgabedienste kann der Client-Funktion des Endgeräts EG insbesondere Information über zusätzlich verfügbare Kanäle bereitstellen. Kann die Set Top Box STBE nur einen einzigen MPEG Datenstrom zugleich empfangen, dann können die zusätzlich verfügbaren Kanäle auf die mit diesem MPEG Datenstrom verfügbaren Kanäle beschränkt sein. Aus diesem Dienstangebot von Ausgabediensten kann beispielsweise der zweite Nutzer Nutzer_2 in einer Kategorie "Alternative Kanäle" eine Option "ARD" auswählen. Dies hat zur Folge, dass eine Anforderung des zweiten Multimediainhalts M2 in der Set Top Box STBE erkannt wird, wobei der zweite Multimediainhalt M2 definiert ist durch den Fernsehkanal "ARD". Die Anforderung des zweiten Multimediainhalts kann insbesondere von der Server-Funktion der Set Top Box STBE erkannt werden, welche beispielsweise eine Empfängerfunktion der Set Top Box STBE für den Fernsehkanal "ARD" zuordnet oder ein IGMP Kommando zum Eintreten (Joining) in eine Multicast-Gruppe zur Bereitstellung des Fernsehkanals "ARD" initiiert. Auf Basis des ersten Multimediainhalts M1 und des zweiten Multimediainhalts M2 sowie der Dienstanforderung durch das Endgerät EG wird daraufhin in der Set Top Box STBE ein Ausgabekriterium ermittelt, welches zu einer Bereitstellung des Fernsehkanals "ARD" für das Endgerät EG führt. Der Fernsehkanal "ARD" wird daraufhin über die Funkschnittstelle in Form eines dritten Multimediainhalts M3 übertragen. Hierzu konvertiert die Set Top Box STBE den Audio- und/oder Video-Strom des alternativen Kanals "ARD" in ein für das Endgerät EG, beispielsweise das Handheld-Gerät, geeignetes Format. Das für das Endgerät EG geeignete Format kann als Konfigurationsdatum in Form von Geräteprofilinformation in der Set Top Box STBE hinterlegt sein und beispielsweise eine für das Endgerät EG geeignete Videoauflösung, wie z. B. 320x240 Pixel, und/oder eine Audio-Kodierung , wie z. B. MP3-Format, betreffen. So können der erste Nutzer Nutzer_1 und/oder der zweite Nutzer Nutzer_2 den alternativen Fernsehkanal "ARD" zusätzlich zu dem über die erste Ausgabeeinheit AE1 in Gestalt eines vierten Multimediainhalts M4 ausgegebenen ersten Multimediainhalt M1 über das Endgerät EG, insbesondere ein Handheld-Gerät verfolgen.

Ein Aufruf des Dienstangebots von Ausgabediensten kann den alternativen Kanal "ARD" nun als ausgewählt aufzeigen. Ein durch eine Bedienaktion des Nutzers Nutzer_1 oder des Nutzers Nutzer_2 erfolgende Anforderung eines weiteren Multimediainhalts zur Ausgabe über die erste Ausgabeeinheit AE1 führt zum Abbruch der Ausgabe des ersten Multimediainhalts M1 in Form des vierten Multimediainhalts M4 und zur Ausgabe des weiteren Multimediainhalts über die erste Ausgabeeinheit AE1, wobei die Bereitstellung des zweiten Multimediainhalts M2 in Form des dritten Multimediainhalts M3 unverändert bleiben kann.

Aus dem Dienstangebot der Ausgabedienste können der erste Nutzer Nutzer_1 und/oder der zweite Nutzer Nutzer_2 ferner über eine Fernbedienungseinheit der Set Top Box STBE, über eine in der Set Top Box STBE integrierte Bedieneinheit oder über das Endgerät EG ein unbedingtes Vertauschen der über die erste Ausgabeeinheit AE1 und der über das Endgerät EG erfolgenden Ausgaben herbeiführen. Wird eine Option "Swap Ausgaben" gewählt, dann hat dies zur Folge, dass die Server-Funktion der Set Top Box STBE eine zugehörige Dienstanforderung erkennt. Auf Basis des ersten Multimediainhalts M1 und des zweiten Multimediainhalts M2 sowie der zugehörigen Dienstanforderung durch das Endgerät EG wird daraufhin in der Set Top Box STBE ein Ausgabekriterium ermittelt, welches beispielsweise zu einer Ausgabe des Fernsehkanals "ARD" in Form eines vierten Multimediainhalts M4 über die erste Ausgabeeinheit AE1 führt. Der erste Multimediainhalt M1 wird daraufhin über die Funkschnittstelle in Form eines dritten Multimediainhalts M3 übertragen. Hierzu konvertiert die Set Top Box STBE den Audio- und/oder Video-Strom des ersten Multimediainhalts M1 in ein für das Endgerät EG, beispielsweise das Handheld-Gerät, geeignetes Format.

Aus dem Dienstangebot der Ausgabedienste können der erste Nutzer Nutzer_1 und/oder der zweite Nutzer Nutzer_2 ebenso über die Fernbedienungseinheit der Set Top Box STBE, über die in der Set Top Box STBE integrierte Bedieneinheit oder über das Endgerät EG ein automatisches bedingtes Vertauschen der über die erste Ausgabeeinheit AE1 und der über das Endgerät EG erfolgenden Ausgaben herbeiführen. Wird eine Option "Swap bei Werbung" gewählt, dann hat dies zur Folge, dass die Server-Funktion der Set Top Box STBE eine zugehörige Dienstanforderung erkennt. Dies hat zur Folge dass eine permanente Überwachung des ersten Multimediainhalts M1 im Hinblick auf Werbeblöcke einsetzt. Hierzu können in der Set Top Box STBE lokal implementierte Erkennungsmechanismen zur Anwendung kommen, wie auch externe Erkennungsmechanismen außerhalb der Set Top Box STBE. Wird in dem ersten Multimediainhalt M1 durch Eigenerkennung in der Set Top Box STBE oder durch Abfrage oder Benachrichtigung von einem externen, für Werbeblockerkennung dienenden Server ein Beginn eines Werbeblocks für den ersten Multimedianinhalt M1 erkannt, dann erfolgt ein Vertauschen der Ausgaben über die erste Ausgabeeinheit AE1 und über das Endgerät EG. Hierzu wird auf Basis des ersten Multimediainhalts M1 und des zweiten Multimediainhalts M2, der zugehörigen Dienstanforderung und des Ereignisses des Beginns eines Werbeblocks in dem ersten Multimediainhalt M1 in der Set Top Box STBE ein Ausgabekriterium ermittelt, welches beispielsweise zu einer Ausgabe des Fernsehkanals "ARD" in Form eines vierten Multimediainhalts M4 über die erste Ausgabeeinheit AE1 führt. Der erste Multimediainhalt M1, welcher nunmehr den Werbeblock betrifft, wird daraufhin über die Funkschnittstelle in Form eines dritten Multimediainhalts M3 übertragen. Hierzu konvertiert die Set Top Box STBE den Audio- und/oder Video-Strom des ersten Multimediainhalts M1 in ein für das Endgerät EG, beispielsweise für das Handheld-Gerät, geeignetes Format. Wird in dem ersten Multimediainhalt M1 durch Eigenerkennung in der Set Top Box STBE oder durch Abfrage oder Benachrichtigung von einem externen, für Werbeblockerkennung dienenden Server ein Ende eines Werbeblocks für den ersten Multimedianinhalt M1 erkannt, dann erfolgt ein erneutes Vertauschen der Ausgaben über die erste Ausgabeeinheit AE1 und über das Endgerät EG . Hierzu wird auf Basis des ersten Multimediainhalts M1 und des zweiten Multimediainhalts M2, der zugehörigen Dienstanforderung und des Ereignisses der Erkennung eines Endes eines Werbeblocks in dem ersten Multimediainhalt M1 in der Set Top Box STBE ein Ausgabekriterium ermittelt, welches beispielsweise zu einer Ausgabe des ersten Multimediainhalts M1, welcher nunmehr keinen Werbeblock betrifft, in Form eines vierten Multimediainhalts M4 über die erste Ausgabeeinheit AE1 führt. Der Fernsehkanal "ARD" wird daraufhin über die Funkschnittstelle in Form eines dritten Multimediainhalts M3 übertragen. Hierzu konvertiert die Set Top Box STBE den Audio- und/oder Video-Strom des ersten Multimediainhalts M1 in ein für das Endgerät EG, beispielsweise für das Handheld-Gerät, geeignetes Format.

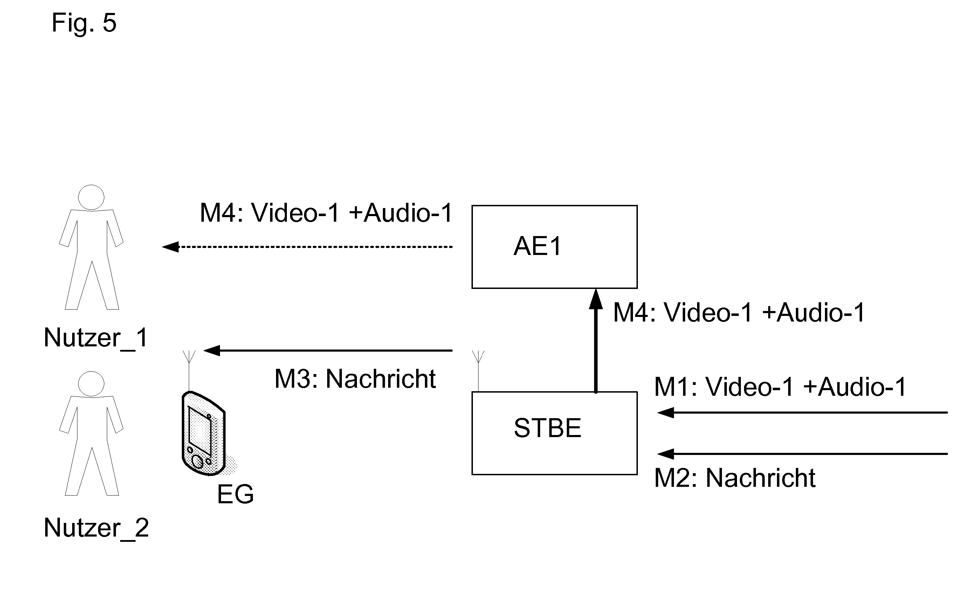

**Fig.5** zeigt eine vereinfachte Blockdarstellung eines Ausführungsbeispiels zur ereignisgetriebenen Bereitstellung von Nachrichten. Nachrichten können hierbei beliebige Nachrichten eines Kommunikationspartners, beliebige Informationen für einen Nutzer oder jegliche Notifkationen über ein Eintreten eines Ereignisses sein.

Eine Set Top Box STBE empfängt beispielsweise einen ersten Multimediainhalt M1, bestehend aus Elementarströmen für Video und Audio per Streaming. Dies kann zum Beispiel über IP, Kabelnetzsignal, Satellitensignal oder terrestrisches Antennensignal erfolgen. Die Set Top Box STBE ist beispielsweise über eine Audio/Video Schnittstelle mit einer ersten Ausgabeeinheit AE1 verbunden. Die Set Top Box STBE steht ferner zum Beispiel über eine Funkschnittstelle mit einem Endgerät EG in Verbindung. Hierbei kann die Funkschnittstelle beispielsweise eine WLAN oder Bluetooth basierte Schnittstelle sein. Das Endgerät EG kann ein Handheld-Gerät sein, was im Folgenden angenommen sei. Ein erster Nutzer Nutzer_1 und/oder ein zweiter Nutzer_2 nutzen die erste Ausgabeeinheit AE1 zur Verfolgung des ersten Multimediainhalts M1. Zusätzlich steht ihnen das Endgerät EG zur Verfügung. Der erste Multimediainhalt M1 ist definiert durch eine Video-Information Video-1 und eine Audio-Information Audio-1 und wird durch die Set Top Box STBE in Form eines vierten Multimediainhalts M4, welcher insbesondere an die Bedürfnisse der Schnittstelle zu dem ersten Ausgabegerät AE1 beispielsweise im Hinblick auf eine Kodierung angepasst ist, über die erste Ausgabeeinheit AE1 ausgegeben. Damit können der erste Nutzer Nutzer_1 und der zweite Nutzer Nutzer_2 den ersten Multimediainhalt M1 in Form des vierten Multimediainhalts M4 verfolgen.

Insbesondere über das Handheld-Gerät steht dem ersten Nutzer Nutzer 1 und/oder dem zweiten Nutzer Nutzer_2 ein Dienstangebot von Ausgabediensten zur Verfügung. Aus diesem kann beispielsweise der zweite Nutzer Nutzer_2 eine Option "Notify Werbeblock" oder eine Option "Notify Sucherfolg" auswählen. Im Hinblick auf das Dienstangebot der Ausgabedienste kann die Set Top Box STBE eine Server-Funktion für Ausgabedienste bereitstellen, und das Handheld-Gerät kann eine zugehörige Client-Funktion umfassen. Die Server-Funktion kann der Client-Funktion insbesondere eine Nachricht in Form eines dritten Multimediainhalts M3 bereitstellen.

Wird die Option "Notify Werbeblock" gewählt, dann hat dies zur Folge, dass die Server-Funktion der Set Top Box STBE eine zugehörige Dienstanforderung erkennt. Damit setzt eine permanente Überwachung des ersten Multimediainhalts M1 im Hinblick auf Werbeblöcke ein. Hierzu können in der Set Top Box STBE lokal implementierte Erkennungsmechanismen zur Anwendung kommen wie auch externe Erkennungsmechanismen außerhalb der Set Top Box STBE.

Wird durch einen externen Erkennungsmechanismus, beispielsweise auf einem externen Server zur Erkennung von Werbeblöcken, ein Beginn eines Werbeblocks erkannt, dann wird die Set Top Box STBE hiervon in Form eines zweiten Multimediainhalts M2, welche eine entsprechende Informationsnachricht betrifft, informiert. Wird in dem ersten Multimediainhalt M1 durch Eigenerkennung in der Set Top Box STBE oder durch Abfrage von dem externen, für Werbeblockerkennung dienenden Server ein Beginn eines Werbeblocks für den ersten Multimedianinhalt M1 in der Set Top Box STBE erkannt, dann erfolgt eine Generierung eines entsprechenden zweiten Multimediainhalts M2 in der Set Top Box STBE. Auf Basis des ersten Multimediainhalts M1 und des zweiten Multimediainhalts M2, der zugehörigen Dienstanforderung und des Ereignisses der Erkennung eines Beginns eines Werbeblocks in dem ersten Multimediainhalt M1 wird nun in der Set Top Box STBE ein Ausgabekriterium ermittelt, welches beispielsweise zu einer Ausgabe einer geeigneten Informationsnachricht für den ersten Nutzer Nutzer_1 und/oder den zweiten Nutzer Nutzer_2 über das Handheld-Gerät führt. Die geeignete Informationsnachricht könnte beispielsweise eine Text-Nachricht sein des Inhalts "Es wurde in dem Fernsehkanal ARD in der Sendung XYZ um 12:33 Uhr ein Beginn einer Werbesendung erkannt." Diese kann dem Handheld-Gerät über die Funkschnittstelle in Form eines dritten Multimediainhalts M3 übertragen werden. Hierzu konvertiert die Set Top Box STBE die geeignete Informationsnachricht in ein für das Handheld-Gerät geeignetes Format. Abhängig von der Konfiguration des Dienstangebots der Ausgabedienste kann als dritter Multimediainhalt M3 auch der in geeignete Kodierung umgesetzte erste Multimediainhalt M1 mit der geeigneten Informationsnachricht in Form einer temporären oder dauerhaften Overlay-Ausgabe bereitgestellt werden.

Wird durch den externen Erkennungsmechanismus, beispielsweise auf einem externen Server zur Erkennung von Werbeblöcken, ein Ende eines Werbeblocks erkannt, dann wird die Set Top Box STBE hiervon in Form eines weiteren zweiten Multimediainhalts M2', welcher eine entsprechende Informationsnachricht betrifft, informiert. Wird in dem ersten Multimediainhalt M1 durch Eigenerkennung in der Set Top Box STBE oder durch Abfrage von dem externen, für Werbeblockerkennung dienenden Server ein Ende eines Werbeblocks für den ersten Multimedianinhalt M1 in der Set Top Box STBE erkannt, dann erfolgt eine Generierung eines entsprechenden weiteren zweiten Multimediainhalts M2' in der Set Top Box STBE. Auf Basis des ersten Multimediainhalts M1 und des weiteren zweiten Multimediainhalts M2', der zugehörigen Dienstanforderung und des Ereignisses der Erkennung eines Endes eines Werbeblocks in dem ersten Multimediainhalt M1 wird nun in der Set Top Box STBE ein Ausgabekriterium ermittelt, welches beispielsweise zu einer Ausgabe einer weiteren geeigneten Informationsnachricht für den ersten Nutzer Nutzer_1 und/oder den zweiten Nutzer Nutzer_2 über das Handheld-Gerät führt. Die weitere geeignete Informationsnachricht könnte beispielsweise eine Text-Nachricht sein des Inhalts "Es wurde in dem Fernsehkanal ARD in der Sendung XYZ um 12:43 Uhr ein Ende einer Werbesendung erkannt." Diese kann dem Handheld-Gerät über die Funkschnittstelle in Form eines weiteren dritten Multimediainhalts M3' übertragen werden. Hierzu konvertiert die Set Top Box STBE die weitere geeignete Informationsnachricht in ein für das Handheld-Gerät geeignetes Format. Abhängig von der Konfiguration des Dienstangebots der Ausgabedienste kann als weiterer dritter Multimediainhalt M3' auch der in geeignete Kodierung umgesetzte erste Multimediainhalt M1 mit der geeigneten Informationsnachricht in Form einer temporären oder dauerhaften Overlay-Ausgabe bereitgestellt werden.

Hat der zweite Nutzer Nutzer_2 sich beispielsweise mit Beginn eines Werbeblocks von der ersten Ausgabeeinheit AE1 entfernt, aber das Handheld-Gerät mitgenommen, so kann der zweite Nutzer Nutzer_2 von dem Ende des Werbeblocks über das Handheld-Gerät informiert werden und seine Rückkehr an das erste Ausgabegerät antreten. Bis er dort eingetroffen ist, kann er über das Handheld-Gerät den ersten Multimediainhalt verfolgen, so dass er vorteilhaft keinen ihn interessierenden Teil des ersten Multimediainhalts M1 versäumt.

Wird die Option "Notify Sucherfolg" gewählt, dann hat dies zur Folge, dass die Server-Funktion der Set Top Box STBE eine zugehörige Dienstanforderung erkennt. Damit setzt beispielsweise eine permanente Überwachung des verfügbaren Programmangebots im Hinblick auf einen durch den ersten Nutzer Nutzer_1 oder den zweiten Nutzer Nutzer_2 definierten und damit vorkonfigurierten Ausdruck ein. Hierzu können in der Set Top Box STBE lokal implementierte Suchmechanismen zur Anwendung kommen wie auch externe Suchmechanismen außerhalb der Set Top Box STBE.

Wird durch einen externen Suchmechanismus, beispielsweise auf einem externen Server zur Erkennung von Werbeblöcken, ein Sucherfolg für den vorkonfigurierten Ausdruck erkannt, dann wird die Set Top Box STBE hiervon in Form eines anderen zweiten Multimediainhalts M2'', welcher eine entsprechende Informationsnachricht betrifft, informiert. Wird durch Eigenerkennung in der Set Top Box STBE oder durch Abfrage von dem externen, für eine Suche nach dem vorkonfigurierten Ausdruck tätigen Server ein Sucherfolg in der Set Top Box STBE erkannt, dann erfolgt eine Generierung eines entsprechenden anderen zweiten Multimediainhalts M2'' in der Set Top Box STBE. Auf Basis des anderen zweiten Multimediainhalts M2'', der zugehörigen Dienstanforderung und des Ereignisses der Erkennung eines Sucherfolgs wird nun in der Set Top Box STBE ein Ausgabekriterium ermittelt, welches beispielsweise zu einer Ausgabe einer geeigneten Informationsnachricht für den ersten Nutzer Nutzer_1 und/oder den zweiten Nutzer Nutzer_2 über das Handheld-Gerät führt. Die geeignete Informationsnachricht könnte beispielsweise eine Text-Nachricht sein des Inhalts "Der Suchbegriff "Tagesthemen" hat folgende Treffer ergeben: 1. Fernsehkanal ARD um 20:00 Uhr; 2. Fernsehkanal ARD um 22:15 Uhr, 3. Aufzeichnung ARD von gestern um 22:15 Uhr. Geben Sie eine Treffernummer ein zum Wechsel bzw. zur Buchung eines Wechsels zu dem gefundenen Programm." Diese geeignete Informationsnachricht kann dem Handheld-Gerät über die Funkschnittstelle in Form eines anderen dritten Multimediainhalts M3" übertragen werden. Hierzu konvertiert die Set Top Box STBE die geeignete Informationsnachricht in ein für das Handheld-Gerät geeignetes Format. Abhängig von der Konfiguration des Dienstangebots der Ausgabedienste kann als anderer dritter Multimediainhalt M3" auch unmittelbar zu einem in geeignete Kodierung umgesetzten Multimediainhalt aus der angezeigten Trefferliste gewechselt werden, sofern ein solcher verfügbar ist. Hierbei kann die geeignete Informationsnachricht in Form einer temporären oder dauerhaften Overlay-Ausgabe bereitgestellt werden.

**Fig**.**6** zeigt eine vereinfachte Blockdarstellung eines Ausführungsbeispiels zur Bereitstellung von zeitversetztem Fernsehen. Eine Set Top Box STBE empfängt beispielsweise einen ersten Multimediainhalt M1, bestehend aus Elementarströmen für Video und Audio per Streaming. Dies kann zum Beispiel über IP, Kabelnetzsignal, Satellitensignal oder terrestrisches Antennensignal erfolgen. Die Set Top Box STBE ist beispielsweise über eine Audio/Video Schnittstelle mit einer ersten Ausgabeeinheit AE1 verbunden. Die Set Top Box STBE steht ferner zum Beispiel über eine Funkschnittstelle mit einem Endgerät EG in Verbindung. Das Endgerät EG kann ein Handheld-Gerät sein, was im Folgenden angenommen sei. Ein erster Nutzer Nutzer 1 und/oder ein zweiter Nutzer_2 nutzen die erste Ausgabeeinheit AE1 zur Verfolgung des ersten Multimediainhalts M1. Zusätzlich steht ihnen das Endgerät EG zur Verfügung. Der erste Multimediainhalt M1 ist definiert durch eine Video-Information Video und eine Audio-Information Audio und wird durch die Set Top Box STBE in Form eines vierten Multimediainhalts M4, welcher insbesondere an die Bedürfnisse der Schnittstelle zu dem ersten Ausgabegerät AE1 beispielsweise im Hinblick auf eine Kodierung angepasst ist, über die erste Ausgabeeinheit AE1 ausgegeben. Damit können der erste Nutzer Nutzer_1 und der zweite Nutzer Nutzer_2 den ersten Multimediainhalt M1 in Form des vierten Multimediainhalts verfolgen.

Insbesondere über das Handheld-Gerät steht dem ersten Nutzer Nutzer_1 und/oder dem zweiten Nutzer Nutzer_2 ein Dienstangebot von Ausgabediensten zur Verfügung. Aus diesem kann beispielsweise der zweite Nutzer Nutzer_2 eine Option "TSTV" zur Steuerung von zeitversetztem Fernsehen inklusive zeitversetzten Aufnahmen über das Handheld-Gerät auswählen. Im Hinblick auf das Dienstangebot der Ausgabedienste kann die Set Top Box STBE eine Server-Funktion für Ausgabedienste bereitstellen, und das Handheld-Gerät kann eine zugehörige Client-Funktion umfassen. Die Server-Funktion kann der Client-Funktion insbesondere Nachrichten für eine graphische Benutzeroberfläche und/oder einen zeitversetzten Teil TSTV-M1 des ersten Multimediainhalts M1 jeweils in Form eines dritten Multimediainhalts M3 bereitstellen.

Wird die Option "TSTV" gewählt, dann hat dies zur Folge, dass die Server-Funktion der Set Top Box STBE eine zugehörige Dienstanforderung erkennt. Damit setzt eine Aufzeichnung des ersten Multimediainhalts M1 in einer PVR Funktion 601 der Set Top Box STBE ein. Alternativ kann die PVR Funktion 601 auch in einem externen Server liegen, welcher in Kommunikation mit der Set Top Box STBE stehen kann. Gleichzeitig erfolgt eine Bereitstellung einer Nachricht für eine Ausgabe einer graphischen Benutzeroberfläche in Form eines dritten Multimediainhalts M3. Die graphische Benutzeroberfläche gestattet es dem zweiten Nutzer Nutzer 2, über das Handheld-Gerät Funktionen zur Steuerung einer zeitversetzten Ausgabe des ersten Multimediainhalts M1 auszuwählen. Insbesondere kann der zweite Nutzer Nutzer_2 eine Aufzeichnung starten, eine Aufzeichnung beenden, eine Aufzeichnung verwalten, also mit einem Namen versehen, einer Bibliothek zuordnen und löschen, eine Aufnahme wiedergeben in Vorwärts- und Rückwärtsrichtung und in unterschiedlichen Geschwindigkeiten sowie Zeiger oder Bookmarks in Bezug auf die Aufzeichnung positionieren. Hierbei kann ein Beginn einer Aufzeichnung, sofern verfügbar, eine definierte Zeit vor einer Anforderung des Beginns der Aufzeichnung liegen, so dass der zweite Nutzer Nutzer_2 auch dann den gewünschten Teil des ersten Multimediainhalts M1 zur Verfügung hat, wenn die Anforderung des Beginns der Aufzeichnung verspätet von dem zweiten Nutzer Nutzer_2 über das Handheld-Gerät eingegeben wird. Ferner kann der zweite Nutzer Nutzer_2 ebenfalls über die graphische Benutzeroberfläche einen Zeiger in der verfügbaren Aufzeichnung des ersten Multimediainhalts M1 positionieren und eine Ausgabe des ersten Multimediainhalts M1 ab dem Zeiger in verschiedenen Geschwindigkeiten und mit allen üblichen Trickplay-Optionen anfordern. Selektion von Optionen aus der graphischen Benutzeroberfläche des Handheld-Geräts führen zu Steuerungsnachrichten 602 des Handheld-Geräts an die Set Top Box STBE, welche beispielsweise über die Funkschnittstelle übertragen werden. Mit einer Erkennung einer Steuerungsnachricht 602 in der Set Top Box STBE erfolgt jeweils eine Festlegung eines zweiten Multimediainhalts M2. welcher definiert sein kann als ein Teil der graphischen Bedienoberfläche oder ein durch einen Zeiger definierten Teil der Aufzeichnung des ersten Multimediainhalts M1 oder eine permanente oder temporäre Überblendung eines durch einen Zeiger definierten Teils der Aufzeichnung des ersten Multimediainhalts M1 durch einen Teil der graphischen Bedienoberfläche. Anhand des ersten Multimediainhalts M1, der Anforderung des zweiten Multimediainhalts M2 und der Dienstanforderung für TSTV wird mit dem Vorliegen einer Steuerungsnachricht 602 ein Ausgabekriterium ermittelt, das zur Bereitstellung des zweiten Multimediainhalts M2 in Form des dritten Multimediainhalt M3 für das Handheld-Gerät führt.

Somit kann der zweite Nutzer Nutzer_2 ohne Beeinträchtigung des ersten Nutzers Nutzer_1 ihn interessierende Aufzeichnungen und zeitversetzte Ausgaben des ersten Multimediainhalts M1 vorteilhaft über das Handheld-Gerät vornehmen.

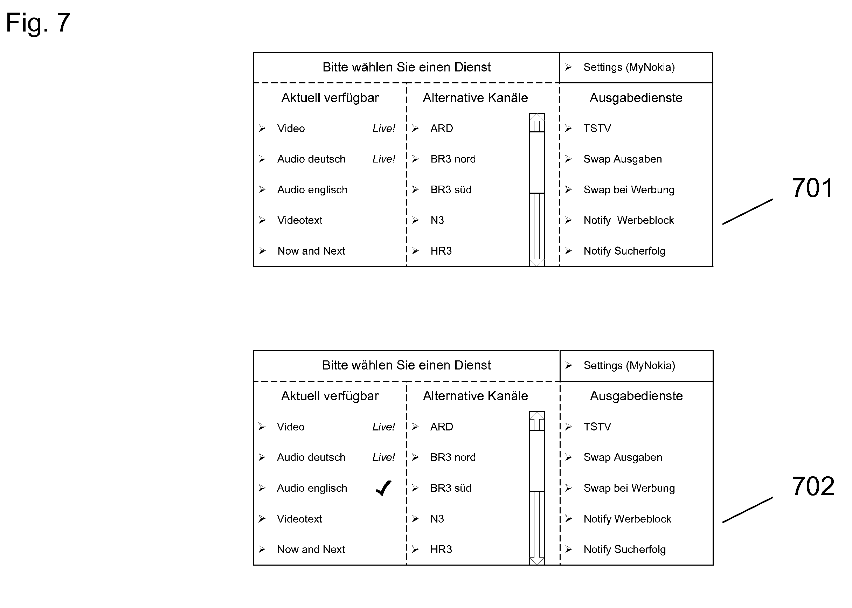

**Fig.7** zeigt eine vereinfachte Darstellung eines Auswahlmenüs von Diensten für mehr als eine Ausgabeeinheit. Eine Ausgabeseite 701 zeigt eine Übersicht verfügbarer Dienste eines Dienstangebots von Ausgabediensten in Form einer graphischen Bedienoberfläche. Die Ausgabeseite 701 kann einem Endgerät mit einer Client-Funktion in Form eines dritten Multimediainhalts durch eine Server-Funktion einer Set Top Box bereitgestellt werden, um einem Nutzer des Endgeräts eine Auswahl eines Ausgabedienstes zu ermöglichen. Mit Hilfe eines Settings-Menüs kann der Nutzer Einstellungen festlegen, welche mit dem Endgerät verknüpft sind. Insbesondere sind dies gerätespezifische Optionen, wie beispielsweise ein bevorzugtes Audio- und/oder Video-Format, eine Video Auflösung, eine Strom-Einkapselung, eine Video-Kodierung, eine Audio-Kodierung, ein konfigurierbarer Suchausdruck. Festlegungen der Settings können über die graphische Bedienoberfläche erfolgen und können in der Set Top Box gespeichert werden. Ein erstmaliges Erstellen der Settings kann zur Hinterlegung eines Cookies durch die Set Top Box in dem Endgerät führen und/oder zur Hinterlegung einer MAC Adresse des Endgeräts in der Set Top Box, wodurch die Settings nach der erstmaligen Erstellung automatisch verfügbar werden können. Auch kann den Settings ein Profilname, im Beispiel "MyNokia" zugeordnet werden, welcher zur Anzeige in der graphischen Bedienoberfläche gelangen kann. Kann kein Profil bzw. Profilname zugeordnet werden, dann kann der Nutzer eines von gespeicherten Profilen auswählen, oder es wird automatisch ein Default-Profil der Settings ausgewählt. Die Ausgabeseite 701 zeigt ferner zu dem aktuell verfügbaren Fernsehprogramm verfügbare Informationen. Diese sind beispielhaft Video-Information, deutsche Audio-Information, englische Audio-Information, Videotext und Now und Next Information, ferner verfügbare alternative Kanäle, die zum Beispiel über das Endgerät zusätzlich bereitgestellt werden können, sowie verfügbare Ausgabedienste, welche beispielsweise zeitversetzte Ausgabe (TSTV), unbedingte Ausgaben-Vertauschung (Swap Ausgaben), Ausgabevertauschung bei Werbung (Swap bei Werbung), Notifizierung von Werbeblöcken und/oder Sucherfolgen sein können.

Eine Ausgabenseite 702 zeigt die aus der Ausgabeseite 701 bekannte graphische Bedienoberfläche des Dienstangebots der Ausgabedienste, nachdem der Nutzer die englische Audio-Information zusätzlich angefordert hat. Hierbei ist der gegenwärtige Zustand einer zusätzlichen Ausgabe der englischen Audio-Information symbolisch gekennzeichnet.

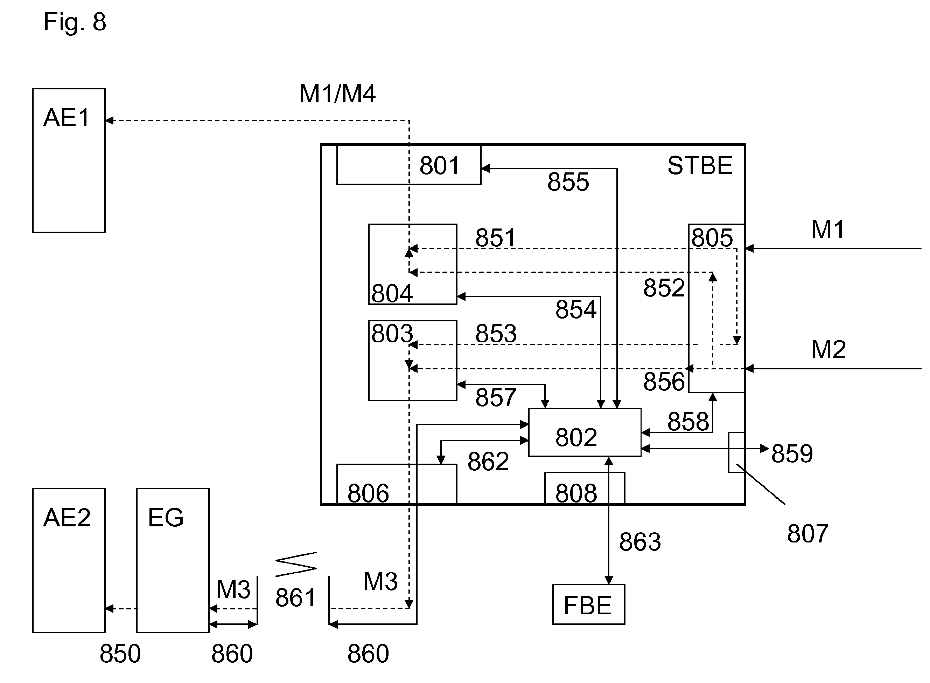

**Fig.8** zeigt eine vereinfachte Blockdarstellung eines Ausführungsbeispiels zur Veranschaulichung einer Vorrichtung zur selektiven Ausgabe von Multimediainhalten.

Die Vorrichtung STBE umfasst eine Schnittstelleneinheit 801, über die ein erster Multimediainhalt M1 von der Vorrichtung STBE an eine erste Ausgabeeinheit AE1 ausgeben wird. Der erste Multimediainhalt M1 kann beispielsweise in Form eines MPEG-konformen Empfangssignals oder eines MPEG-konformen IPbasierten Datenstroms über ein Kommunikationsnetz und/oder Broadcast-Verteilnetz bereitgestellt werden und durch eine Verteileinheit 805 der Vorrichtung STBE terminiert werden. Eine Schnittstelleneinheit 801 kann den ersten Multimediainhalt M1 unmodifiziert oder in für eine Schnittstelle zu der ersten Ausgabeeinheit AE1 angepasster Form an die erste Ausgabeeinheit AE1 ausgeben.

Die Vorrichtung STBE umfasst weiter eine Verarbeitungseinheit 802, die eine Anforderung für einen zweiten Multimediainhalt M2 erkennt und die anhand des ersten Multimediainhalts M1 und zumindest der Anforderung für den zweiten Multimediainhalt M2 ein Ausgabekriterium ermittelt. Hierbei kann die Anforderung für den zweiten Multimediainhalt M2 von einem beispielsweise über eine Funkschnittstelle 861 angebundenen Endgerät EG über eine Kommunikationsbeziehung 860 als Nachricht an die Verarbeitungseinheit 802 geschickt werden. Die Anforderung für den zweiten Multimediainhalt M2 kann alternativ beispielsweise über eine Infrarotschnittstelleneinheit 808 und eine Kommunikationsbeziehung 863 von einer Fernbedienungseinheit FBE an die Verarbeitungseinheit 802 signalisiert werden. Ist der zweite Multimediainhalt M2 über ein IP-basiertes Netz verfügbar, so wird dieser durch der Verarbeitungseinheit 802 angefordert über eine Schnittstelleneinheit 807 zu dem IP-basierten Netz, wobei eine Bereitstellung des zweiten Multimediainhalts M2 per Multicast oder per Unicast über eine Kommunikationsbeziehung 859 angefordert werden kann. Hierauf kann der zweite Multimediainhalt M2 bei Verfügbarkeit der Verteileinheit 805 beispielsweise per Streaming bereitgestellt werden.

Die Vorrichtung STBE umfasst ferner eine erste Bereitstellungseinheit 803, die anhand des ermittelten Ausgabekriteriums aus dem ersten Multimediainhalt M1 und aus dem zweiten Multimediainhalt M2 einen dritten Multimediainhalt M3 bildet zur Bereitstellung für das Endgerät EG. Hierbei wird der dritte Multimediainhalt M3 dem Endgerät EG über die Funkschnittstelle 861 bereitgestellt. Wenn es das Ausgabekriterium verlangt, dann kann der dritte Multimediainhalt M3 identisch mit dem ersten Multimediainhalt M1 oder dem zweiten Multimediainhalt M2 sein. Mit Verfügbarkeit des dritten Multimediainhalts M3 im Endgerät EG wird dieser über eine Verbindungsbeziehung 850 zu einer zweiten Ausgabeeinheit AE2 ausgegeben. Die zweite Ausgabeeinheit AE2 kann alternativ ebenfalls in dem Endgerät EG integriert sein.

Die Vorrichtung STBE umfasst ferner eine zweite Bereitstellungseinheit 804, die anhand des ermittelten Ausgabekriteriums aus dem ersten Multimediainhalt M1 und aus dem zweiten Multimediainhalt M2 einen vierten Multimediainhalt M4 bilden kann zur Ausgabe an die erste Ausgabeeinheit AE1. Wird der vierte Multimediainhalt M4 zur Ausgabe an die erste Ausgabeeinheit AE1 gebildet, dann erfolgt die Ausgabe des vierten Multimediainhalts M4 an die erste Ausgabeeinheit AE1 über die Schnittstelleneinheit 801. Eine bis dahin erfolgende Ausgabe des ersten Multimediainhalts M1 an die erste Ausgabeeinheit AE1 wird hierdurch eingestellt. Wenn es das Ausgabekriterium verlangt, dann kann der vierte Multimediainhalt M4 identisch mit dem ersten Multimediainhalt M1 oder dem zweiten Multimediainhalt M2 sein.

Die Vorrichtung STBE weist ferner eine Überwachungseinheit 806 auf, die eine Überwachung einer Kommunikation zu dem Endgerät EG durchführt, wobei das Ausgabekriterium anhand eines Ergebnisses der Überwachung ermittelt wird. Die Überwachungseinheit 806 kann hierbei eine Überwachung auf einer Ebene einer Übertragung vornehmen. Hierbei kann insbesondere eine Stärke eines Empfangssignals und/oder eine Übertragungsqualität überwacht werden. Zusätzlich kann die Verarbeitungseinheit 802 die Kommunikation zu dem Endgerät EG auf Basis von Nachrichten auf einer Applikationsebene überwachen. Stellt die Überwachungseinheit 806 eine fehlerhafte oder eine wieder einwandfreie Kommunikation fest, so meldet sie dies der Verarbeitungseinheit 802 jeweils über eine Kommunikationsbeziehung 862, wodurch die Verarbeitungseinheit 802 in der Lage ist, zeitnah eine Neubestimmung des Ausgabekriteriums vorzunehmen.

In Abhängigkeit von dem ermittelten Ausgabekriterium veranlasst die Verarbeitungseinheit 802 die Verteileinheit 805 über eine Kommunikationsbeziehung 858 dazu, den ersten Multimediainhalt M1 über eine Kommunikationsbeziehung 853 und den zweiten Multimediainhalt M2 über eine Kommunikationsbeziehung 856 an die erste Bereitstellungseinheit 803 weiterzuleiten. Sofern erforderlich, veranlasst die Verarbeitungseinheit 802 die Verteileinheit 805 über die Kommunikationsbeziehung 858 ferner dazu, den ersten Multimediainhalt M1 über eine Kommunikationsbeziehung 851 und den zweiten Multimediainhalt M2 über eine Kommunikationsbeziehung 852 an die zweite Bereitstellungseinheit 804 weiterzuleiten. In Abhängigkeit von dem ermittelten Ausgabekriterium kann die Verarbeitungseinheit 802 die erste Bereitstellungseinheit 803 mit Hilfe einer Kommunikationsbeziehung 857 darüber informieren, wie der dritte Multimediainhalt M3 aus dem ersten Multimediainhalt M1 und dem zweiten Multimediainhalt M2 gebildet werden soll. Hierzu teilt die Verarbeitungseinheit 802 der ersten Bereitstellungseinheit beispielsweise mit, aus welchen Elementarströmen, Fenstern und Overlay-Ausgaben sich der dritte Multimediainhalt M3 zusammensetzt. In Abhängigkeit von dem ermittelten Ausgabekriterium kann die Verarbeitungseinheit 802 ebenfalls die zweite Bereitstellungseinheit 804 mit Hilfe einer Kommunikationsbeziehung 854 entsprechend darüber informieren, wie der vierte Multimediainhalt M4 aus dem ersten Multimediainhalt M1 und dem zweiten Multimediainhalt M2 gebildet werden soll. Mit Hilfe einer Kommunikationsbeziehung 855 kann die Verarbeitungseinheit 802 die Schnittstelleneinheit 801 hinsichtlich einer erforderlichen Anpassung des ersten Multimediainhalts M1 und/oder des vierten Multimediainhalts M4 an die Schnittstelle zu der ersten Ausgabeeinheit AE1 informieren. Ebenso kann die Verarbeitungseinheit 802 mit Hilfe der Kommunikationsbeziehung 862 die Überwachungseinheit 806 hinsichtlich einer erforderlichen Anpassung des dritten Multimediainhalts M3 an die Funkschnittstelle 861 zu dem Endgerät EG informieren.

Die Vorrichtung STBE kann ein erste Verzögerungseinheit umfassen, die den dritten Multimediainhalt M3 mit einer Verzögerung beaufschlagt, und/oder eine zweite Verzögerungseinheit, die den ersten Multimediainhalt M1 oder den vierten Multimediainhalt M4 mit einer Verzögerung beaufschlagt. Hierbei kann die erste Verzögerungseinheit mit der ersten Bereitstellungseinheit 803 identisch sein, und/oder es kann die zweite Verzögerungseinheit mit der zweiten Bereitstellungseinheit 804 identisch sein. Im Hinblick auf eine Synchronisierung des dritten Multimediainhalts M3 mit dem ersten Multimediainhalt M1 oder mit dem vierten Multimediainhalt M4 kann die Verarbeitungseinheit 802 von dem Endgerät EG Steuernachrichten über die Kommunikationsbeziehung 860 erhalten, aufgrund deren sie die erste und/oder die die zweite Verzögerungseinheit beispielsweise über die Kommunikationsbeziehungen 853 und/oder 854 zur Beaufschlagung des jeweiligen Multimediainhalts mit einer jeweils gewünschten Verzögerung instruiert.

Auch ist es möglich, dass neben dem Endgerät EG weitere Endgeräte mit jeweils eigenen Ausgabeeinheiten über die Funkschnittselle 861 mit der Vorrichtung STBE kommunizieren. Die Vorrichtung STBE kann diesen weiteren Endgeräten ebenfalls den dritten Multimediainhalt M3 bereitstellen. Die Vorrichtung STBE kann jedoch auch für mindestens eines der weiteren Endgeräte einen für das mindestens eine weitere Endgerät spezifischen weiteren dritten Multimediainhalt bilden und dem mindestens einen weiteren Endgerät bereitstellen. Insbesondere ist es beispielsweise möglich, dass jedes der weiteren Endgeräte einen für das jeweilige weitere Endgerät spezifischen weiteren dritten Multimediainhalt erhält. So kann es sein, dass ein erstes weiteres Endgerät alle interaktiven Anwendungen erlaubt, dass ein zweites weiteres Endgerät gleichzeitig Videotext ausgibt, dass ein drittes weiteres Endgerät gleichzeitig eine zusätzliche Audiospur ausgibt. Hierzu sind insbesondere die Verarbeitungseinheit 802, die erste Bereitstellungseinheit 803, die Verteileinheit 805 und die Überwachungseinheit 806 für eine gleichzeitige Unterstützung einer Mehrzahl von Endgeräten ausgebildet.

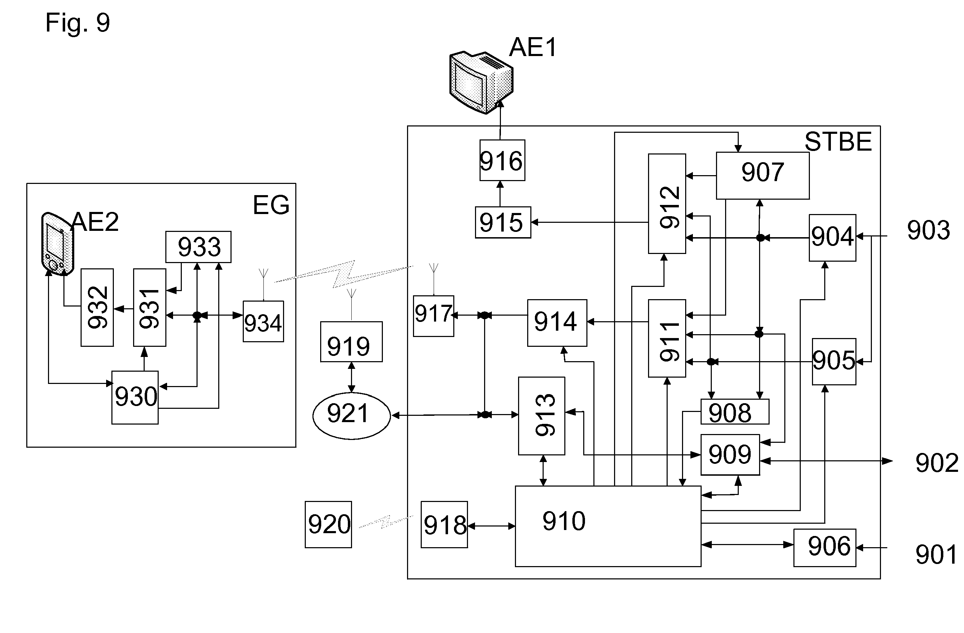

**Fig.9** zeigt eine vereinfachte Blockdarstellung eines weiteren Ausführungsbeispiels zur Veranschaulichung einer Vorrichtung zur selektiven Ausgabe von Multimediainhalten.

Die Vorrichtung STBE besitzt eine erste Empfangseinheit 904 und eine zweite Empfangseinheit 905, welche jeweils einen Fernsehkanal aus einem satellitenbasierten, einem kabelbasierten oder einem terrestrischen Broadcast-Fernsehsignal auswählen und empfangen können oder einen Fernsehkanal über ein IP- basiertes Netz anfordern und IPbasiert empfangen können.

Auf Anforderung einer Steuerungseinheit 910 wählt beispielsweise die erste Empfangseinheit 904 einen ersten Multimediainhalt M1 aus und stellt ihn einer ersten Bereitstellungseinheit 912 und einer zweiten Bereitstellungseinheit 911 zur Verfügung.

Auf Anforderung der Steuerungseinheit 910 wählt beispielsweise auch die zweite Empfangseinheit 905 einen zweiten Multimediainhalt M2 aus und stellt ihn ebenfalls der ersten Bereitstellungseinheit 912 und der zweiten Bereitstellungseinheit 911 zur Verfügung.
Die erste Empfangseinheit 904 und die zweite Empfangseinheit 905 beziehen den ersten Multimediainhalt M1 bzw. den zweiten Multimediainhalt M2 über eine Schnittstelle 903 von einem Broadcast oder einem IP-basierten Netz.

Im Hinblick auf zeitversetztes Fernsehen, TSTV, Aufzeichnungen, Wiedergabe von Aufzeichnungen und anderen PVR- Funktionen können der erste Multimediainhalt M1 und/oder der zweite Multimediainhalt M2 ebenfalls einer ersten lokalen Speichereinheit 907 bereitgestellt werden.

Die erste Bereitstellungseinheit 912 wählt unter Steuerung der Steuerungseinheit 910 zum Beispiel einen der Multimediainhalte M1, M2 oder spezifische Komponenten der Multimediainhalte M1, M2, beispielsweise Audio, Video, Videotext, im Hinblick auf eine Ausgabe an eine erste Ausgabeeinheit AE1 aus. Als Quellen können hierfür die erste Empfangseinheit 904, die zweite Empfangseinheit 905, sowie im Hinblick auf TSTV und PVR- Funktionen die erste lokale Speichereinheit 907 zur Verfügung stehen.

Die zweite Bereitstellungseinheit 911 wählt ebenfalls unter Steuerung der Steuerungseinheit 910 beispielsweise einen der Multimediainhalte M1, M2 oder spezifische Komponenten der Multimediainhalte M1, M2, beispielsweise Audio, Video, Videotext, im Hinblick auf eine Ausgabe an ein Endgerät EG aus. Als Quellen können hierfür die erste Empfangseinheit 904, die zweite Empfangseinheit 905, sowie im Hinblick auf TSTV und PVR- Funktionen die erste lokale Speichereinheit 907 zur Verfügung stehen.

Die erste lokale Speichereinheit 907 kann beispielsweise den ersten Multimediainhalt M1 für Aufnahmezwecke oder für TSTV speichern. Die erste lokale Speichereinheit 907 kann insbesondere einen ersten Teil eines gespeicherten ersten Multimediainhalts M1 der ersten Bereitstellungsfunktion 912 bereitstellen und gleichzeitig einen davon verschiedenen zweiten Teil des gespeicherten ersten Multimediainhalts M1 der zweiten Bereitstellungsfunktion 911 bereitstellen.

In einer Dekodiereinheit 915 wird ein von der ersten Bereitstellungseinheit 912 bereitgestellter vierter Multimediainhalt M4 dekodiert und an eine TV Schnittstelleneinheit 916 übertragen, welche den vierten Multimeidinhalt M4 an eine TV Schnittstelle, beispielsweise an HDMI, anpasst.

In einer Transkodiereinheit 914 kann ein von der zweiten Bereitstellungseinheit 911 bereitgestellter dritter Multimediainhalt M3 im Hinblick auf eine für das Endgerät EG erforderliche Auflösung und/oder eine erforderliche Kodierung transkodiert und an eine erste integrierte Funkschnittstelleneinheit 917 oder über ein häusliches Netz 921 an eine externe Funkschnittstelleneinheit 919 übertragen werden.

Der erste Multimediainhalt M1 und/oder der zweite Multimediainhalt M2 werden in einer Stromanalyseeinheit 908 analysiert. Beispielsweise können der Steuerungseinheit 910 durch die Stromanalyseeinheit 908 Informationen zur Verfügung gestellt werden, welche in zu dem ersten Multimediainhalt M1 und/oder dem zweiten Multimediainhalt M2 gehörigen MPEG-2 konformen Transportströmen enthaltene Video- und/oder Audioströme, eine Video-Auflösung, ein aktuelles und ein folgendes Programm, einen Videotext und/oder eine Werbeblockerkennung betreffen.

Metadaten zu Multimediainhalten, wie z. B. EPG-Daten, können in einer Metadatenverarbeitungseinheit 906 verarbeitet werden und der Steuerungseinheit 910 zur Verfügung gestellt werden. Die Metadatenverarbeitungseinheit 906 bezieht die Metadaten zu den Multimediainhalten über eine Schnittstelle 901 von einem Broadcast oder einem IP-basierten Netz. Die Metadaten können insbesondere auch via Broadcast als Teil eines MPEG-2 konformen Transportstroms oder als Nachrichten oder Dateien über das IP-basierte Netz verfügbar werden. Metadaten können beispielsweise Information über Video und Audioströme, Video-Auflösung, Sendeplan, Werbeblockerkennung umfassen.

Von einer Applikationsausführungseinheit 909 können interaktive Anwendungen empfangen werden über die erste Empfangseinheit 904, die zweite Empfangseinheit 905 und/oder über eine Schnittstelle 902 zu dem IP-basierten Netz. Das Endgerät EG kann mit Hilfe einer Server-Einheit 913 und einer Client-Einheit 930 eine Benutzeroberfläche für die interaktiven Applikationen bereitstellen.

Die Server-Einheit 913 interagiert mit der Client-Einheit 930 des Endgeräts EG und stellt der Client-Einheit 930 Information zu der Benutzeroberfläche bereit sowie Steuerungsinformation für Funktionen des Endgeräts EG, wie sie von der Steuerungseinheit 910 verlangt werden. Umgekehrt empfängt die Server-Einheit 913 Nutzereingaben an dem Endgerät EG über die Client-Einheit 930 und stellt sie der Steuerungseinheit 910 zur Verfügung. Die Server-Einheit 913 kann beispielsweise als http-Server implementiert sein.

Die Vorrichtung STBE kann über eine Fernbedienungseinheit 920 und eine Fernbedienungsschnittstelleneinheit 918, welche nachrichtenbasiert mit der Steuerungseinheit 910 kommuniziert, gesteuert werden. Die Fernbedienungseinheit 920 kann hierzu eine Infrarotschnittstelle der Fernbedienungsschnittstelleneinheit 918 nutzen.

Die Steuerungseinheit 910 führt Steuerungsaufgaben für die Vorrichtung STBE und das Endgerät EG aus. Diese basieren auf unterstützten Ausgabediensten, empfangenen Metadaten, Analyse empfangener Multimediainhalte und erkannter Benutzeingaben über das Endgerät EG und/oder die Fernbedienungseinheit 920.

Das Endgerät EG kann insbesondere ein Handheld-Gerät sein mit einer integrierten zweiten Ausgabeeinheit AE2. Das Endgerät EG kommuniziert mit der Vorrichtung STBE über eine zweite integrierte Funkschnittstelleneinheit 934.

Die Client-Einheit 930 des Endgeräts EG generiert eine Benutzeroberfläche nach Vorgaben der Server-Einheit 913 und steuert Funktionen des Endgeräts EG. Die Client-Einheit 930 kann beispielsweise als http-Browser implementiert sein

Ein über die zweite integrierte Funkschnittstelleneinheit 934 empfangener Multimediainhalt kann einer Auswahleinheit 931 und/oder einer zweiten lokalen Speichereinheit 933 bereitgestellt werden. Hierbei kann ein in der zweiten lokalen Speichereinheit 933 gespeicherter Multimediainhalt unter Steuerung der Client-Einheit 930 der Auswahleinheit 931 bereitgestellt werden. Sowohl die Auswahleinheit 931 als auch die zweiten lokale Speichereinheit 933 können von der Client-Einheit 930 gesteuert werden.

Die Auswahleinheit 931 selektiert eine Quelle eines auszugebenden Multimediainhalts, wobei die zweite lokale Speichereinheit 933 und die zweite integrierte Funkschnittstelleneinheit 917 hierbei als Quelle zur Verfügung stehen können. Der auszugebende Multimediainhalt kann nach Dekodierung in einer weiteren Dekodiereinheit 932 über die zweite Ausgabeeinheit AE2 ausgegeben werden.

Zwischen der Vorrichtung STBE und dem Endgerät EG kann eine gesicherte Verbindung über Verfahren der Funkschnittstellentechnik (Bluetooth, WLAN) etabliert werden. Im Rahmen einer Zuordnung des Endgeräts EG zu der Vorrichtung STBE kann die Client-Einheit 930 der Server-Einheit 913 Eigenschaften des Endgeräts EG mitteilen, wie zum Beispiel unterstützte Video-Auflösung, unterstützte Kodierverfahren. Zur Etablierung einer Verbindung zwischen dem Endgerät EG und der Vorrichtung STBE kann beispielsweise eine über die Client-Einheit 930 bereitgestellte, von einem Nutzer des Endgeräts EG eingegebene URL der Server-Einheit 930 dienen. Ebenfalls kann die Client-Einheit 930 eine Liste von alternativ nutzbaren Vorrichtungen erhalten, beispielsweise unter Verwendung einer UPnP Geräteerkennung. Aus dieser Liste kann die Client-Einheit die Vorrichtung STBE oder die Server-Einheit 913 auswählen. Auch kann eine auf Nutzerkennung / Passwort gestützte Authentifizierung vorgesehen sein zur Beschränkung eines Zugriffs auf die Vorrichtung STBE auf bestimmte Nutzer.

Das Zusammenwirken der vorstehend genannten Einheiten im Hinblick auf die Bereitstellung von Ausgabediensten über die erste Ausgabeeinheit AE1 und die zweite Ausgabeeinheit AE2 wird im Folgenden anhand einiger Beispiele erläutert.

Wird der erste Multimediainhalt M1 über die erste Ausgabeeinheit AE1 ausgegeben, dann ermittelt die Stromanalyseeinheit 908 die unterstützten Sprachen /Tonspuren und informiert hierüber die Steuerungseinheit 910. Diese stellt der Server-Einheit 913 eine Liste verfügbarer Sprachen zur Verfügung, welche die Server-Einheit 913 der Client-Einheit 930 mitteilt. Eine Auswahl einer Sprache durch einen Nutzer des Endgeräts EG teilt die Client-Einheit 930 der Server-Einheit 913 mit, welche hiervon die Steuerungsfunktion 910 informiert. Hieraufhin instruiert die Steuerungsfunktion 910 die zweite Bereitstellungsfunktion 911, die gewünschte Tonspur für das Endgerät EG bereitzustellen. Eine Bereitstellung der gewünschten Tonspur für das Endgerät EG erfolgt nach optionaler Transkodierung über die Funkschnittstelle. Der Audiostrom der Tonspur kann daraufhin in dem Endgerät EG dekodiert und über die zweite Ausgabeeinheit AE2 ausgegeben werden.

In entsprechender Weise kann der Nutzer des Endgeräts EG eine Ausgabe von Videotext über das Endgerät EG verlangen. Hierbei kann der Videotext in dem Endgerät EG dekodiert werden oder bereits in der Vorrichtung STBE, beispielsweise durch die Stromanalyseeinheit 908, woraufhin der Videotext dem Endgerät EG in Form von HTML Seiten bereitgestellt werden kann.

Soll eine interaktive Applikation über das Endgerät EG bereitgestellt werden, dann kann dies auf Anforderung des Nutzers des Endgeräts EG erfolgen. Dies hat zur Folge, dass die Applikationsausführungseinheit 909 und/oder die Steuerungseinheit 910 eine Benutzerschnittstelle für die interaktive Applikation über die Server-Einheit 913 und die die Client-Einheit 930 zur Ausgabe über die zweite Ausgabeeinheit AE2 weiterreichen. Eingaben des Nutzers des Endgeräts EG werden umgekehrt über die Client-Einheit 930 und die Server-Einheit an die Applikationsausführungseinheit 909 weitergegeben.

Gibt der Nutzer des Endgeräts EG über das Endgerät EG ein, dass er eine Bereitstellung des zweiten Multimedianhalts M2 für das Endgerät EG wünscht, dann wird hiervon die Steuerungsfunktion 910 informiert, welche die zweite Empfangseinheit 905 und die zweite Bereitstellungseinheit 911 entsprechend informiert.

Gibt der Nutzer des Endgeräts EG über das Endgerät EG ein, dass er ein Vertauschen, kurz Swap, der über die erste Ausgabeeinheit AE1 und über die zweite Ausgabeeinheit AE2 erfolgenden Ausgaben wünscht, dann wird hiervon die Steuerungsfunktion 910 informiert, welche die erste Bereitstellungseinheit 912 und die zweite Bereitstellungseinheit 911 entsprechend informiert. Dies hat zur Folge, dass die erste Bereitstellungseinheit 912, welche bisher den ersten Multimediainhalt M1 von der ersten Empfangseinheit 904 bezog, nun den zweiten Multimediainhalt M2 von der zweiten Empfangseinheit 905 selektiert. Zugleich hat dies zur Folge, dass die zweite Bereitstellungseinheit 911, welche bisher den zweiten Multimediainhalt M2 von der zweiten Empfangseinheit 905 bezog, nun den ersten Multimediainhalt M1 von der ersten Empfangseinheit 904 selektiert.

Gibt der Nutzer des Endgeräts EG über das Endgerät EG ein, dass er ein Vertauschen oder Swap der über die erste Ausgabeeinheit AE1 und über die zweite Ausgabeeinheit AE2 erfolgenden Ausgaben im Falle eines Werbeblocks in dem ersten Multimediainhalt M1 wünscht, dann wird hiervon die Steuerungsfunktion 910 informiert. Diese instruiert die Stromanalyseeinheit 908 daraufhin, ihr Beginn und Ende von Werbeblöcken zu melden. Meldet die Stromanalyseeinheit 908 in der Folge einen Beginn oder ein Ende eines Werbeblocks in dem ersten Multimediainhalt M1, welcher beispielsweise über die erste Empfangseinheit 904 empfangen wird, dann initiiert die Steuerungsfunktion 910 ein Vertauschen oder Swap der Ausgaben ohne weitere Interaktion mit dem Nutzer des Endgeräts EG automatisch.

Gibt der Nutzer des Endgeräts EG über das Endgerät EG ein, dass er ein Benachrichtigung wünscht im Falle eines Werbeblocks in dem ersten Multimediainhalt M1, dann wird hiervon die Steuerungsfunktion 910 informiert. Diese instruiert die Stromanalyseeinheit 908 daraufhin, ihr Beginn und Ende von Werbeblöcken zu melden. Meldet die Stromanalyseeinheit 908 in der Folge einen Beginn oder ein Ende eines Werbeblocks in dem ersten Multimediainhalt M1, welcher beispielsweise über die erste Empfangseinheit 904 empfangen wird, dann initiiert die Steuerungsfunktion 910 in der Folge automatisch jeweils ein Senden einer entsprechenden Benachrichtigung über die Server-Einheit 913 und die Client-Einheit 930.

Gibt der Nutzer des Endgeräts EG über das Endgerät EG einen ihn interessierenden Ausdruck zur Suche ein, dann wird hiervon die Steuerungsfunktion 910 informiert. Diese instruiert die Metadatenverarbeitungseinheit 906 daraufhin, die ihr verfügbaren Metadaten beispielsweise aller TV Kanäle hinsichtlich des interessierenden Ausdrucks fortan zu durchsuchen und ihr Sucherfolge jeweils zu melden. Meldet die Metadatenverarbeitungseinheit 906 in der Folge einen Sucherfolg, dann initiiert die Steuerungsfunktion 910 automatisch jeweils ein Senden einer entsprechenden Benachrichtigung über die Server-Einheit 913 und die Client-Einheit 930. Hierbei kann die entsprechende Benachrichtigung jeweils eine Kanalnummer und Metadaten enthalten. Zusätzlich steht dem Nutzer eine Ausgabeoption bereit, gemäß der mit einem Sucherfolg eine automatische Ausgabe des TV-Kanals, für welchen der Sucherfolg eingetreten ist, über die erste Ausgabeeinheit AE1 und/oder das Endgerät EG erfolgt. Ist diese Ausgabeoption durch den Nutzer des Endgeräts EG gewählt oder vorkonfiguriert, so instruiert die Steuerungsfunktion 910 die erste Empfangseinheit 904 und/oder die zweite Empfangseinheit 905 und/oder die erste Bereitstellungseinheit 912 und/oder die zweite Bereitstellungseinheit 911 entsprechend bei Eintritt eines Sucherfolgs.

Gibt der Nutzer des Endgeräts EG über das Endgerät EG ein, dass er eine um n Sekunden rückwirkende Aufzeichnung des ersten Multimediainhalts M1 wünscht, dann wird hiervon die Steuerungsfunktion 910 informiert. Die Zahl n kann hierbei mit der Anforderung spezifiziert oder vorkonfiguriert sein. Die Steuerungsfunktion 910 informiert die erste lokale Speichereinheit 907 hierauf, den in einer laufenden Aufzeichnung des ersten Multimediainhalts M1 zur rückwärtigen Aufzeichnung gehörenden Anteil nicht zu löschen oder zu überschreiben. Gibt der Nutzer des Endgeräts EG über das Endgerät EG ein, dass er ein Ende der Aufzeichnung des ersten Multimediainhalts M1 wünscht, dann wird hiervon wiederum die Steuerungsfunktion 910 informiert, welche die erste lokale Speichereinheit 907 und die zweite Bereitstellungseinheit 911 entsprechend informiert. Daraufhin wird die gewünschte Aufzeichnung dem Endgerät EG bereitgestellt zur Speicherung in der zweiten lokalen Speichereinheit 933, wobei die Speicherung der Aufzeichnung nach Information der Server-Einheit 913 durch die Steuerungseinheit 910 erfolgt unter Steuerung der Client-Einheit 930.

Gibt der Nutzer des Endgeräts EG über das Endgerät EG ein, dass er eine um n Sekunden zeitversetzte Ausgabe des ersten Multimediainhalts M1 wünscht, dann wird hiervon die Steuerungsfunktion 910 informiert. Die Zahl n kann hierbei mit der Anforderung spezifiziert sein. Die Steuerungsfunktion 910 informiert die erste lokale Speichereinheit 907 hieraufhin, in einer laufenden Aufzeichnung des ersten Multimediainhalts M1 den angeforderten Anteil der Aufzeichnung nicht zu löschen. Daraufhin wird die gewünschte Aufzeichnung dem Endgerät EG bereitgestellt zur Ausgabe über die zweite Ausgabeeinheit AE2, wobei die Ausgabe der Aufzeichnung nach Information der Server-Einheit 913 durch die Steuerungseinheit 910 erfolgt unter Steuerung der Client-Einheit 930.

### Abkürzungsliste

- A/V: Audio/Video
- CD: Compact Disc
- DSL: Digital Subscriber Line
- DSLAM: Digital Subscriber Line Access Multiplexer
- DTV: Digital Television
- DVB: Digital Video Broadcasting
- DVB-C: Digital Video Broadcasting Cable
- DVB-S: Digital Video Broadcasting Satellite
- DVB-T: Digital Video Broadcasting Terrestrial
- DVD: Digital Versatile Disc
- EPG: Electronic Program Guide
- ESG: Electronic Service Guide
- FEC: Forward Error Correction
- FTP: File Transfer Protocol
- HD: High Definition
- HDMI: High Definition Multimedia Interface
- HDTV: High Definition Television
- HTML: Hypertext Markup Language
- IGMP: Internet Group Management Protocol
- IP: Internet Protocol
- IPTV: Internet Protocol Television
- LAN: Local Area Network
- MAC: Media Access Control
- MP3: MPEG-1 Audio Layer 3
- MPEG: Moving Picture Experts Group
- PC: Personal Computer
- PCM: Pulse Code Modulation
- PDA: Personal Digital Assistent
- PIN: Persönliche Identifikationsnummer
- PVR: Personal Video Recorder
- RTP: Real-Time Transport Protocol
- RTSP: Real-Time Streaming Protocol
- SD: Standard Definition
- SDH: Synchronous Digital Hierarchy
- SDTV: Standard Definition Television
- SMS: Short Message Service
- STB: Set Top Box
- TCP: Transmission Control Protocol
- TFTP: Trivial File Transfer Protocol
- TV: Television, Fernsehen, Fernsehgerät
- UDP: User Datagram Protocol
- UPnP: Universal Plug and Play
- URL: Uniform Resource Locator
- VoD: Video on Demand
- WLAN: Wireless Local Area Network

## Patentansprüche

1. Verfahren zur selektiven Ausgabe von Multimediainhalten an eine erste Ausgabeeinheit (AE1) und über ein Endgerät (EG) an eine zweite Ausgabeeinheit (AE2),
- bei dem ein erster Multimediainhalt (M1) an die erste Ausgabeeinheit (AE1) ausgegeben wird (101);
- bei dem eine Überwachung einer Kommunikation zu dem Endgerät (EG) durchgeführt wird;
- bei dem die Überwachung eine Empfangssignalstärke und eine Übertragungsqualität umfasst;
- bei dem eine Anforderung für einen zweiten Multimediainhalt (M2) erkannt wird (102);
- bei dem anhand des ersten Multimediainhalts (M1) und zumindest der Anforderung für den zweiten Multimediainhalt (M2) ein Ausgabekriterium ermittelt wird (103), wobei das Ausgabekriterium auch anhand eines Ergebnisses der Überwachung ermittelt wird;
- bei dem anhand des Ausgabekriteriums aus dem ersten Multimediainhalt (M1) und aus dem zweiten Multimediainhalt (M2) ein dritter Multimediainhalt (M3) gebildet wird (104) zur Bereitstellung für das Endgerät (EG) zur Ausgabe an die zweite Ausgabeeinheit (AE2);
- bei dem anhand des Ausgabekriteriums aus dem ersten Multimediainhalt (M1) und aus dem zweiten Multimediainhalt (M2) ein vierter Multimediainhalt (M4) gebildet wird zur Ausgabe an die erste Ausgabeeinheit (AE1);
wobei der zweite Multimediainhalt (M2) ein Videotext ist, wobei, wenn die Kommunikation mit dem Endgerät (EG) hinreichend stark gestört ist, das Ausgabekriterium so ermittelt wird, dass eine Ausgabe des Videotexts als Overlay oder Fenster über die erste Ausgabeeinheit (AE1) erfolgt, und
wobei, wenn die Kommunikation wieder hinreichend ungestört oder einwandfrei ist, das Ausgabekriterium so ermittelt wird, dass die Ausgabe des Videotexts als Overlay oder Fenster automatisch nicht weiter erfolgt, dafür aber eine Bereitstellung des Videotexts für das Endgerät (EG).

2. Verfahren nach Anspruch 1,
- wobei der dritte Multimediainhalt (M3) den ersten Multimediainhalt (M1) oder den zweiten Multimediainhalt (M2) umfasst.

3. Verfahren nach einem der vorstehenden Ansprüche,
- bei dem der zweite Multimediainhalt (M2) über eine Schnittstelle von einem Netz empfangen wird oder von einer lokalen Wiedergabeeinheit bereitgestellt wird.

4. Verfahren nach einem der vorstehenden Ansprüche,
- bei dem der dritte Multimediainhalt (M3) in Abhängigkeit von einer Eigenschaft des Endgeräts (EG) und/oder von einem Übertragungsweg zu dem Endgerät (EG) aufbereitet und bereitgestellt wird (105).

5. Verfahren nach einem der vorstehenden Ansprüche,
- bei dem der vierte Multimediainhalt (M4) in Abhängigkeit von einer Eigenschaft der ersten Ausgabeeinheit (AE1) und/oder von einem Übertragungsweg zu der ersten Ausgabeeinheit (AE1) aufbereitet wird.

6. Verfahren nach einem der vorstehenden Ansprüche,
- wobei das Ausgabekriterium ermittelt wird anhand von mindestens einer der folgenden Eigenschaften:
- einer Eigenschaft des Endgeräts (EG)
- einer Eigenschaft der ersten Ausgabeeinheit (AE1)
- einer Betriebsart des Endgeräts (EG)
- einer Betriebsart der ersten Ausgabeeinheit (AE1)
- einer Eigenschaft eines Übertragungswegs zu dem Endgerät (EG)
- einer Eigenschaft eines Übertragungswegs zu der ersten Ausgabeeinheit (AE1)

7. Verfahren nach einem der vorstehenden Ansprüche,
wobei der zweite Multimediainhalt (M2) mindestens eine der folgenden Informationen umfasst:
- eine Tonspurinformation in einer für den Multimediainhalt (M1) verfügbaren Sprache
- eine Untertitelinformation für den ersten Multimediainhalt (M1)
- eine Videotextinformation
- eine Programminformation
- eine Information eines interaktiven Dialogs
- eine Information eines Informationsdienstes

8. Verfahren nach einem der vorstehenden Ansprüche,
wobei das Ausgabekriterium abhängig davon ermittelt wird, ob der zweite Multimediainhalt (M2) alternative Zusatzinformation zu dem ersten Multimediainhalt (M1) darstellt oder umfasst.

9. Verfahren nach einem der vorstehenden Ansprüche,
- bei dem der dritte Multimediainhalt (M3) oder bei dem der vierte Multimediainhalt (M4) mit einer Verzögerung beaufschlagt wird.

10. Verfahren nach einem der vorstehenden Ansprüche,
- bei dem eine Dienstanforderung eines Nutzers der ersten Ausgabeeinheit (AE1) oder des Endgeräts (EG) erkannt wird,
- wobei das Ausgabekriterium anhand der Dienstanforderung ermittelt wird.

11. Verfahren nach einem der vorstehenden Ansprüche,
- bei dem das Ausgabekriterium ermittelt wird, falls ein Anfang eines unerwünschten Inhaltsblocks in dem ersten Multimediainhalt (M1) und/oder ein Ende eines unerwünschten Inhaltsblocks in dem zweiten Multimediainhalt (M2) erkannt wird.

12. Verfahren nach einem der vorstehenden Ansprüche,
- wobei der zweite Multimediainhalt (M2) eine Nachricht umfasst, welche empfangen wird oder aufgrund eines Ereignisses generiert wird.

13. Verfahren nach einem der vorstehenden Ansprüche,
wobei der zweite Multimediainhalt (M2) eine Aufzeichnung des ersten Multimediainhalts (M1) ist.

14. Verfahren nach einem der vorstehenden Ansprüche,
wobei die zweite Ausgabeeinheit (AE2) separat von dem Endgerät (EG) zum Anschluss an das Endgerät (EG) ausgebildet ist.

15. Verfahren nach einem der vorstehenden Ansprüche,
wobei die Kommunikation zu dem Endgerät (EG) auf Basis von Infrarotsignalen oder Bluetooth erfolgt.

16. Vorrichtung zur selektiven Ausgabe von Multimediainhalten an eine erste Ausgabeeinheit (AE1) und über ein Endgerät (EG) an eine zweite Ausgabeeinheit (AE2) mit
- einer Schnittstelleneinheit (801), die einen ersten Multimediainhalt (M1) an die erste Ausgabeeinheit (AE1) ausgibt;
- einer Überwachungseinheit (806, 802), die eine Überwachung einer Kommunikation zu dem Endgerät (EG) durchführt;
- einer Verarbeitungseinheit (802), die eine Anforderung für einen zweiten Multimediainhalt (M2) erkennt und die anhand des ersten Multimediainhalts (M1) und zumindest der Anforderung für den zweiten Multimediainhalt (M2) ein Ausgabekriterium ermittelt, wobei das Ausgabekriterium auch anhand eines Ergebnisses der Überwachung ermittelt wird;
- einer ersten Bereitstellungseinheit (803), die anhand des ermittelten Ausgabekriteriums aus dem ersten Multimediainhalt (M1) und aus dem zweiten Multimediainhalt (M2) einen dritten Multimediainhalt (M3) bildet zur Bereitstellung für das Endgerät (EG) zur Ausgabe an die zweite Ausgabeeinheit (AE2); und
- einer zweiten Bereitstellungseinheit (804), die anhand des ermittelten Ausgabekriteriums aus dem ersten Multimediainhalt (M1) und aus dem zweiten Multimediainhalt (M2) einen vierten Multimediainhalt (M4) bildet zur Ausgabe an die erste Ausgabeeinheit (AE1)
wobei die Überwachung eine Empfangssignalstärke und eine Übertragungsqualität umfasst,
wobei der zweite Multimediainhalt (M2) ein Videotext ist, wobei, wenn die Kommunikation mit dem Endgerät (EG) hinreichend stark gestört ist, das Ausgabekriterium so ermittelt wird, dass eine Ausgabe des Videotexts als Overlay oder Fenster über die erste Ausgabeeinheit (AE1) erfolgt, und wobei, wenn die Kommunikation wieder hinreichend ungestört oder einwandfrei ist, das Ausgabekriterium so ermittelt wird, dass die Ausgabe des Videotexts als Overlay oder Fenster automatisch nicht weiter erfolgt, dafür aber eine Bereitstellung des Videotexts für das Endgerät (EG).

17. Vorrichtung nach Anspruch 15 mit
- einer ersten Verzögerungseinheit (803), die den dritten Multimediainhalt (M3) mit einer Verzögerung beaufschlagt, und/oder
- einer zweiten Verzögerungseinheit (804), die den ersten Multimediainhalt (M1) oder den vierten Multimediainhalt (M4) mit einer Verzögerung beaufschlagt.

18. System zur selektiven Ausgabe von Multimediainhalten über ein Endgeräts (EG) umfassend
- die Vorrichtung nach einem der Ansprüche 15-16;
- das Endgerät (EG); und
- die erste Ausgabeeinheit (AE1).

## Claims

1. Method for selectively outputting multimedia content to a first output unit (AE1) and via a terminal (EG) to a second output unit (AE2),
- in which a first multimedia content (M1) is output (101) to the first output unit (AE1);
- in which monitoring of a communication to the terminal (EG) is performed;
- in which the monitoring comprises a reception signal strength and a transmission quality;
- in which a request for a second multimedia content (M2) is identified (102);
- in which the first multimedia content (M1) and at least the request for the second multimedia content (M2) are taken as a basis for ascertaining (103) an output criterion, wherein the output criterion is also ascertained on the basis of a result of the monitoring;
- in which the output criterion is taken as a basis for forming (104) a third multimedia content (M3) from the first multimedia content (M1) and from the second multimedia content (M2) for provision for the terminal (EG) for output to the second output unit (AE2);
- in which the output criterion is taken as a basis for forming a fourth multimedia content (M4) from the first multimedia content (M1) and from the second multimedia content (M2) for output to the first output unit (AE1); wherein the second multimedia content (M2) is a video text, wherein if the communication with the terminal (EG) has sufficiently high levels of interference then the output criterion is ascertained such that the video text is output as an overlay or window via the first output unit (AE1), and wherein if the communication has sufficiently low levels of interference again or is perfect then the output criterion is ascertained such that the video text is automatically no longer output as an overlay or window, but instead the video text is provided for the terminal (EG).

2. Method according to Claim 1,
- wherein the third multimedia content (M3) comprises the first multimedia content (M1) or the second multimedia content (M2).

3. Method according to either of the preceding claims,
- in which the second multimedia content (M2) is received from a network via an interface or is provided by a local reproduction unit.

4. Method according to one of the preceding claims,
- in which the third multimedia content (M3) is conditioned and provided (105) on the basis of a property of the terminal (EG) and/or on the basis of a transmission path to the terminal (EG).

5. Method according to one of the preceding claims,
- in which the fourth multimedia content (M4) is conditioned on the basis of a property of the first output unit (AE1) and/or on the basis of a transmission path to the first output unit (AE1).

6. Method according to one of the preceding claims,
- wherein the output criterion is ascertained on the basis of at least one of the following properties:
- a property of the terminal (EG)
- a property of the first output unit (AE1)
- a mode of operation of the terminal (EG)
- a mode of operation of the first output unit (AE1)
- a property of a transmission path to the terminal (EG)
- a property of a transmission path to the first output unit (AE1).

7. Method according to one of the preceding claims,
wherein the second multimedia content (M2) comprises at least one of the following information items:
- a sound track information item in a language that is available for the multimedia content (M1)
- a subtitle information item for the first multimedia content (M1)
- a video text information item
- a programme information item
- an information item for an interactive dialogue
- an information item for an information service.

8. Method according to one of the preceding claims,
wherein the output criterion is ascertained on the basis of whether the second multimedia content (M2) is or comprises alternative supplementary information to the first multimedia content (M1).

9. Method according to one of the preceding claims,
- in which the third multimedia content (M3) or in which the fourth multimedia content (M4) is provided with a delay.

10. Method according to one of the preceding claims,
- in which a service request from a user of the first output unit (AE1) or the terminal (EG) is identified,
- wherein the output criterion is ascertained on the basis of the service request.

11. Method according to one of the preceding claims,
- in which the output criterion is ascertained when a start of an undesirable content block in the first multimedia content (M1) and/or an end of an undesirable content block in the second multimedia content (M2) is identified.

12. Method according to one of the preceding claims,
- wherein the second multimedia content (M2) comprises a message that is received or that is generated on the basis of an event.

13. Method according to one of the preceding claims,
- wherein the second multimedia content (M2) is a recording of the first multimedia content (M1).

14. Method according to one of the preceding claims,
- wherein the second output unit (AE2) is designed to be separate from the terminal (EG) for connection to the terminal (EG).

15. Method according to one of the preceding claims,
- wherein the communication to the terminal (EG) is effected on the basis of infrared signals or Bluetooth.

16. Apparatus for selectively outputting multimedia content to a first output unit (AE1) and via a terminal (EG) to a second output unit (AE2), having
- an interface unit (801) that outputs a first multimedia content (M1) to the first output unit (AE1);
- a monitoring unit (806, 802) that performs monitoring of a communication to the terminal (EG);
- a processing unit (802) that identifies a request for a second multimedia content (M2) and that takes the first multimedia content (M1) and at least the request for the second multimedia content (M2) as a basis for ascertaining an output criterion, wherein the output criterion is also ascertained on the basis of a result of the monitoring;
- a first provision unit (803) that takes the ascertained output criterion as a basis for forming a third multimedia content (M3) from the first multimedia content (M1) and from the second multimedia content (M2) for provision for the terminal (EG) for output to the second output unit (AE2); and
- a second provision unit (804) that takes the ascertained output criterion as a basis for forming a fourth multimedia content (M4) from the first multimedia content (M1) and from the second multimedia content (M2) for output to the first output unit (AE1),
wherein the monitoring comprises a reception signal strength and a transmission quality,
wherein the second multimedia content (M2) is a video text, wherein if the communication with the terminal (EG) has sufficiently high levels of interference then the output criterion is ascertained such that the video text is output as an overlay or window via the first output unit (AE1), and wherein if the communication has sufficiently low levels of interference again or is perfect then the output criterion is ascertained such that the video text is automatically no longer output as an overlay or window, but instead the video text is provided for the terminal (EG).

17. Apparatus according to Claim 15, having
- a first delay unit (803) that provides the third multimedia content (M3) with a delay, and/or
- a second delay unit (804) that provides the first multimedia content (M1) or the fourth multimedia content (M4) with a delay.

18. A system for selectively outputting multimedia content via a terminal (EG), comprising
- the apparatus according to either of Claims 15 - 16;
- the terminal (EG); and
- the first output unit (AE1).

## Revendications

1. Procédé de sortie sélective de contenus multimédias à une première unité de sortie (AE1) et, via un terminal (EG), à une deuxième unité de sortie (AE2), selon lequel :
- un premier contenu multimédia (M1) est sorti (101) à la première unité de sortie (AE1) ;
- une surveillance d'une communication vers le terminal (EG) est effectuée ;
- la surveillance comprend une intensité de signal de réception et une qualité de transmission ;
- une demande pour un deuxième contenu multimédia (M2) est identifiée (102) ;
- un critère de sortie est déterminé (103) à l'aide du premier contenu multimédia (M1) et d'au moins la demande pour le deuxième contenu multimédia (M2), le critère de sortie étant également déterminé à l'aide d'un résultat de la surveillance ;
- un troisième contenu multimédia (M3) est formé (104) à l'aide du critère de sortie à partir du premier contenu multimédia (M1) et du deuxième contenu multimédia (M2) pour la mise à la disposition du terminal (EG) pour la sortie à la deuxième unité de sortie (AE2) ;
- un quatrième contenu multimédia (M4) est formé à l'aide du critère de sortie à partir du premier contenu multimédia (M1) et du deuxième contenu multimédia (M2) pour la sortie à la première unité de sortie (AE1),
le deuxième contenu multimédia (M2) étant un vidéotexte, le critère de sortie étant, lorsque la communication avec le terminal (EG) est perturbée de manière suffisamment forte, déterminé de manière telle que la sortie du vidéotexte s'effectue en tant qu'overlay ou fenêtre via la première unité de sortie (AE1), et le critère de sortie étant, lorsque la communication est de nouveau parfaite ou non perturbée dans une mesure suffisante, déterminé de manière telle qu'automatiquement la sortie du vidéotexte ne s'effectue plus en tant qu'overlay ou fenêtre, mais mise à disposition du vidéotexte pour le terminal (EG).

2. Procédé selon la revendication 1, le troisième contenu multimédia (M3) comprenant le premier contenu multimédia (M1) ou le deuxième contenu multimédia (M2).

3. Procédé selon l'une des revendications précédentes, selon lequel le deuxième contenu multimédia (M2) est reçu via une interface d'un réseau ou mis à disposition par une unité de reproduction locale.

4. Procédé selon l'une des revendications précédentes, selon lequel le troisième contenu multimédia (M3) est traité et mis à disposition (105) en fonction d'une caractéristique du terminal (EG) et/ou d'un trajet de transmission vers le terminal (EG).

5. Procédé selon l'une des revendications précédentes, selon lequel le quatrième contenu multimédia (M4) est traité en fonction d'une caractéristique de la première unité de sortie (AE1) et/ou d'un trajet de transmission vers la première unité de sortie (AE1).

6. Procédé selon l'une des revendications précédentes, selon lequel le critère de sortie est déterminé sur la base d'au moins l'une des caractéristiques suivantes :
- une caractéristique du terminal (EG) ;
- une caractéristique de la première unité de sortie (AE1) ;
- un mode de fonctionnement du terminal (EG) ;
- un mode de fonctionnement de la première unité de sortie (AE1) ;
- une caractéristique d'un trajet de transmission vers le terminal (EG) ;
- une caractéristique d'un trajet de transmission vers la première unité de sortie (AE1).

7. Procédé selon l'une des revendications précédentes, le deuxième contenu multimédia (M2) comprenant au moins l'une des informations suivantes :
- une information de piste audio dans une langue disponible pour le contenu multimédia (M1) ;
- une information de sous-titrage pour le premier contenu multimédia (M1) ;
- une information de vidéotexte ;
- une information de programme ;
- une information d'un dialogue interactif ;
- une information d'un service d'information.

8. Procédé selon l'une des revendications précédentes, le critère de sortie étant déterminé en fonction de la question de savoir si le deuxième contenu multimédia (M2) représente ou comprend une information supplémentaire alternative en plus du premier contenu multimédia (M1) .

9. Procédé selon l'une des revendications précédentes, selon lequel un retard est appliqué au troisième contenu multimédia (M3) ou au quatrième contenu multimédia (M4).

10. Procédé selon l'une des revendications précédentes, selon lequel une demande de service d'un utilisateur de la première unité de sortie (AE1) ou du terminal (EG) est identifiée,
le critère de sortie étant déterminé à l'aide de la demande de service.

11. Procédé selon l'une des revendications précédentes, selon lequel le critère de sortie est déterminé si un début d'un bloc de contenu indésirable est identifié dans le premier contenu multimédia (M1) et/ou une fin d'un bloc de contenu indésirable est identifiée dans le deuxième contenu multimédia (M2).

12. Procédé selon l'une des revendications précédentes, le deuxième contenu multimédia (M2) comprenant un message qui est reçu ou qui est généré sur la base d'un événement.

13. Procédé selon l'une des revendications précédentes, le deuxième contenu multimédia (M2) étant un enregistrement du premier contenu multimédia (M1).

14. Procédé selon l'une des revendications précédentes, la deuxième unité de sortie (AE2) étant formée séparément du terminal (EG) pour raccordement au terminal (EG).

15. Procédé selon l'une des revendications précédentes, la communication vers le terminal (EG) s'effectuant sur la base de signaux infrarouges ou bluetooth.

16. Dispositif de sortie sélective de contenus multimédias à une première unité de sortie (AE1) et, via un terminal (EG), à une deuxième unité de sortie (AE2), comprenant :
- une unité d'interface (801) qui sort un premier contenu multimédia (M1) à la première unité de sortie (AE1) ;
- une unité de surveillance (806, 802) qui effectue une surveillance d'une communication vers le terminal (EG) ;
- une unité de traitement (802) qui reconnaît une demande pour un deuxième contenu multimédia (M2) et détermine un critère de sortie à l'aide du premier contenu multimédia (M1) et d'au moins la demande pour le deuxième contenu multimédia (M2), le critère de sortie étant également déterminé à l'aide d'un résultat de la surveillance ;
- une première unité de mise à disposition (803) qui forme, à l'aide du critère de sortie déterminé à partir du premier contenu multimédia (M1) et du deuxième contenu multimédia (M2), un troisième contenu multimédia (M3) pour la mise à la disposition du terminal (EG) pour la sortie à la deuxième unité de sortie (AE2) et
- une deuxième unité de mise à disposition (804) qui forme, à l'aide du critère de sortie déterminé à partir du premier contenu multimédia (M1) et du deuxième contenu multimédia (M2), un quatrième contenu multimédia (M4) pour la sortie à la première unité de sortie (AE1) ;
la surveillance comprenant une intensité de signal de réception et une qualité de transmission,
le deuxième contenu multimédia (M2) étant un vidéotexte, le critère de sortie étant, lorsque la communication avec le terminal (EG) est perturbée de manière suffisamment forte, déterminé de manière telle que la sortie du vidéotexte s'effectue en tant qu'overlay ou fenêtre via la première unité de sortie (AE1), et le critère de sortie étant, lorsque la communication est de nouveau parfaite ou non perturbée dans une mesure suffisante, déterminé de manière telle qu'automatiquement la sortie du vidéotexte ne s'effectue plus en tant qu'overlay ou fenêtre, mais mise à disposition du vidéotexte pour le terminal (EG).

17. Dispositif selon la revendication 15, comprenant
- une première unité de retard (803) qui applique un retard au troisième contenu multimédia (M3) et/ou
- une deuxième unité de retard (804) qui applique un retard au premier contenu multimédia (M1) ou au quatrième contenu multimédia (M4).

18. Système de sortie sélective de contenus multimédias via un terminal (EG), comprenant :
- le dispositif selon l'une des revendications 15 et 16 ;
- le terminal (EG) et
- la première unité de sortie (AE1).
